# EUROPEAN PATENT APPLICATION

(11) **EP 1 643 231 A1**
(43) Date of publication of application: **05.04.2006**
(21) Application number: 04746309.6
(22) Date of filing: 17.06.2004
(51) Int. Cl.: G01N 1/00, G01N 35/08

(54) **DEVICE AND METHOD FOR CARRYING AND TREATING LIQUID**

(30) Priority: 09.07.2003 JP 2003272344; 09.07.2003 JP 2003272342; 09.07.2003 JP 2003272346; 09.07.2003 JP 2003272341; 09.07.2003 JP 2003272345; 09.07.2003 JP 2003272343
(71) Applicant: Olympus Corporation, Tokyo 151-0072 (JP)
(72) Inventor: TOGINO, Takayoshi, Koganei-shi, Tokyo 184-0002 (JP); MURAKAMI, Miyuki, Hino-shi, Tokyo 191-0061 (JP)
(74) Representative: von Hellfeld, Axel
(86) International application number: PCT/JP2004/008840
(87) International publication number: WO 2005/005961

(57) **Abstract**

This invention relates to a liquid transporting/processing device and a liquid transporting/processing method, which transport (or move) liquid per se or substance dissolved or contained in the liquid or adsorbed or sticking to the liquid, and which perform the process of washing a flow path. Washing solution (55) is transported in one direction or back and forth along the flow path (33), thereby washing the flow path (33) that electrically controls the transportation of the liquid.

## Description

### Technical Field

This invention relates to a liquid transporting/processing device and a liquid transporting/processing method. More particularly, the invention relates to a device and method for transporting liquid per se or substance dissolved or contained in the liquid or adsorbed or sticking to the liquid, and for performing the process of washing a flow path.

### Background Art

Hitherto, a phenomenon called electro-wetting is known, in which the contact angle of liquid changes when a voltage is applied to the liquid. This phenomenon is utilized as a mechanism for controlling the shape of liquid drops, thereby to alter the optical characteristics of the liquid drops. The contact area or facial shape of each liquid drop is electrically changed to control the shape of the liquid drop (see Patent Document 1 and Patent Document 2) .

It is proposed that the electro-wetting be used in order to transport (or move) liquid drop in a desired direction or to split each drop into parts (see Non-Patent Document 1 and Non-Patent Document 2).

Also known is a phenomenon called dielectrophoresis, in which tiny particles such as liquid drops move toward an intense electric field. It is proposed that an electric field that rotates a progressive wave be generated in order to transport (or move) liquid drops in the direction in which the electric field extends (see Non-Patent Document 3 and Non-Patent Document 4).
[Patent Document 1]
   Jpn. Pat. Appln. Laid-Open Publication No. 9-311643
[Pat. Document 2]
   Jpn. Pat. Appln. Laid-Open Publication No. 2000-356708
[Non-Patent Document 1]
   Sensors and Actuators A95(2002), pp. 259-268
[Non-Patent Document 2]
   Journal of Microelectromechanical Systems, Vol. 12, No. 1 (2003), pp. 70-80
[Non-Patent Document 3]
   Revised Electrostatics Handbook (1^{st} edition, The Institute of
   Electrostatics Japan, Ohmsha, Ltd., Nov. 25, 1998, pp. 850-853
[Non-Patent Document 4]
   Measurement and Control, Vol. 42, No. 1 (2003), pp. 33-37

### Disclosure of Invention

This invention has been made in view of the present state of prior art. An object of this invention is to provide a liquid transporting/processing device and a liquid transporting/processing method, which transport (or move) liquid per se or substance dissolved or contained in the liquid or adsorbed or sticking to the liquid, and which perform the process of washing a flow path.

Another object of this invention is to provide a liquid transporting/processing device which transports (or moves) liquid per se or substance dissolved or contained in the liquid or adsorbed or sticking to the liquid, and which performs various processes (or controls).

Still another object of this invention is to provide a liquid transporting/processing device and a liquid transporting/processing method, which transport (or move) liquid per se or substance dissolved or contained in the liquid or adsorbed or sticking to the liquid, and which performs the processes of mixing and stirring the liquid and substance.

A further object of the invention is to provide a liquid transporting/processing device and a liquid transporting/processing method, which transport (or move) liquid per se or substance dissolved or contained in the liquid or adsorbed or sticking to the liquid, and which perform the processes of measuring the amount of the liquid (metering) and sampling the liquid in portions (divisional sampling).

Another obj ect of the invention is to provide a liquid transporting/processing device and a liquid transporting/processing method, which transport (or move) liquid per se or substance dissolved or contained in the liquid or adsorbed or sticking to the liquid, and which perform the process of selecting specific ones of liquid drops, rearranging the liquid drops and the process of monitoring the liquid drops in terms of position or motion .

Still another object of this invention is to provide a liquid transporting/processing system which transports (or moves) liquid per se or substance dissolved or contained in the liquid or adsorbed or sticking to the liquid, and which performs various processes (or controls).

To achieve the objects described above, a liquid transporting/processing device according to this invention is characterized by comprising:
a flow path which is provided on a substrate and in which a plurality of liquid drops move;
a plurality of electrodes which are applied with a voltage that is controlled to move the liquid drops in the flow path in a prescribed direction; and
an insulating layer that insulates the liquid drops existing in the flow path, from at least some of the electrodes.

The device has the function of suppressing contamination of the liquid drops passing through the flow path.

A liquid transporting/processing method according to this invention is designed for use in a liquid transporting/processing device comprising a flow path which is provided on a substrate and in which a plurality of liquid drops move, a plurality of electrodes which are applied with a voltage that is controlled to move the liquid drops in the flow path in a prescribed direction, and an insulating layer that electrically insulates the liquid drops existing in the flow path, from at least some of the electrodes. The method comprises:
a step of moving at least one of the liquid drops by utilizing the voltage applied to the electrodes; and
a step of suppressing contamination of some of the liquid drops, caused by the remaining liquid drops that have moved in the flow path in the prescribed direction.

### Brief Description of the Drawings

FIG. 1 is sectional views for explaining the operating principle of a liquid-transporting means according to the first embodiment, which utilizes the electro-wetting phenomenon;
FIG. 2 is a sectional view showing the major components of a modification of the means illustrated in FIG. 1;
FIG. 3 is sectional views depicting the configuration of a liquid transporting means according to a second embodiment, which utilizes the electro-wetting phenomenon;
FIG. 4 is a sectional view showing the configuration of a liquid transporting means which is a modification of the second embodiment;
FIG. 5 is a sectional view for explaining the operating principle of a liquid-transporting means according to a third embodiment, which transports liquid by utilizing dielectrophoresis and an electric field that rotates a progressive wave;
FIG. 6 is a perspective view (a) and a partly sectional view (b), both showing an embodiment that has a flow path with a cross section shaped like a V groove;
FIG. 7 is a see-through perspective view (a) and a partly sectional view (b), both showing an embodiment that has a flow path having a rectangular cross section;
FIG. 8 is a see-through perspective view (a) and a partly sectional view (b), both showing a flow path of the first embodiment, which has a rectangular cross section and a linear common electrode;
FIG. 9 is a see-through perspective view (a) and a partly sectional view (b), both showing a flow path of the first embodiment, which is planer and which has a linear common electrode;
FIG. 10 is a perspective view (a) and a partly sectional view (b), both showing the arrangement of divided electrodes and a linear electrode laid in the flow path shown in FIG. 9;
FIG. 11 is a plan view (a) and sectional view (b), both showing a liquid-transporting means of the second embodiment, which is a planar type and in which the arrangement shown in FIG. 10 is modified;
FIG. 12 is a plan view (a) and sectional view (b), both showing a flow path having a cross section shaped like a V groove, in which the arrangement shown in FIG. 10 is modified;
FIG. 13 is plan views illustrating divided electrodes that are modified in shape;
FIG. 14 is a see-through perspective view of a hollow cylindrical liquid transporting means formed by rolling a planer-type one;
FIG. 15 is a see-through, exploded perspective view of a two-dimensional liquid transporting means that is a modification of the second embodiment shown in FIG. 4;
FIG. 16 is a see-through, exploded perspective view of a two-dimensional liquid transporting means that is a modification of the first embodiment shown in FIG. 1 or a modification of the second embodiment shown in FIG. 3;
FIG. 17 is a see-through perspective view (a) and a sectional view (b), both showing how wires are connected to the divided electrodes in the configuration illustrated in FIG. 16;
FIG. 18 is a see-through, exploded perspective view (a) and a sectional view (b) of a two-dimensional liquid-transporting means, which is a modification of the first embodiment and which has a planer flow path;
FIG. 19 is a plan view showing another embodiment having the configuration in which the flow path is planer and open in the same way as shown in FIG. 18;
FIG. 20 is a plan view showing another embodiment in which flow paths are combined into one, thus mixing two liquids;
FIG. 21 is a see-through perspective view schematically showing a liquid transporting means of closed type, which is a liquid transporting/processing device for mixing liquids as shown in FIG. 20 and which the flow path has a cross section shaped like a V groove;
FIG. 22 is a schematic representation of a modification of the embodiment shown in FIG. 20;
FIG. 23 is a schematic perspective view illustrating an embodiment in which liquids are mixed by the method of FIG. 22 in a closed or opened two-dimensional (planer) flow path;
FIG. 24 is schematic diagrams showing a configuration and operation for mixing two liquid drops into one by using a hollow cylindrical flow path;
FIG. 25 is a diagram schematically showing a flow path in which two drops of different liquids contact a drop of another liquid, at the opposite sides thereof;
FIG. 26 is a diagram showing a divided-electrode pattern (a) of an embodiment, which has a stirring region provided between two flow paths, and illustrating a direction (b) in which liquids flow;
FIG. 27 is a diagram showing a divided-electrode pattern of another embodiment that has a stirring region provided between two flow paths;
FIG. 28 is a diagram depicting an embodiment in which a liquid drop is moved back and forth in one flow path, and is thereby made to roll in the flow path;
FIG. 29 is a schematic diagram showing another embodiment that has a stirring region provided between two flow paths;
FIG. 30 is a schematic diagram depicting still another embodiment that has a stirring region provided between two flow paths;
FIG. 31 is a perspective view schematically showing an embodiment in which the substrate has a groove, in the middle part of which projections are arranged, forming a zigzag path, thereby to promote the stirring of liquid;
FIG. 32 is a perspective view schematically showing an embodiment in which the substrate has a groove, in the middle part of which a gate part is arranged, thus narrowing the flow path;
FIG. 33 is schematic diagrams depicting an embodiment in which hydrophilic regions and hydrophobic regions are alternately arranged in the direction a liquid drop moves in a closed linear flow path (a) or an opened planer flow path (b), thereby to promote the stirring of liquid;
FIG. 34 is a schematic plan view showing an embodiment in which the liquid is stirred in the system of FIG. 27, in a closed or opened two-dimensional planer flow path;
FIG. 35 is a schematic plan view showing an embodiment in which the liquid is stirred in the system of FIG. 28, in a closed or opened two-dimensional planer flow path;
FIG. 36 is a schematic plan view showing another embodiment in which the liquid is stirred in the system of FIG. 27, in a closed or opened two-dimensional planer flow path;
FIG. 37 is a schematic plan view showing another embodiment in which the liquid is stirred in the system of FIG. 26, in a closed or opened two-dimensional planer flow path;
FIG. 38 is a plan view schematically illustrating an embodiment and the operation thereof, which performs the processes of measuring the amount of liquid (metering) and sampling the liquid in portions (divisional sampling), while transporting the fluid in the flow path;
FIG. 39 is schematic diagrams explaining how liquid is sampled in a prescribed amount every time a predetermined time elapses, by utilizing the divisional sampling illustrated in FIG. 38, and showing the changes or the like according to elapsed time;
FIG. 40 is plan views schematically showing the process of sampling the liquid in a prescribed amount, by using only one linear flow path;
FIG. 41 is plan views schematically showing the process of sampling the liquid in a prescribed amount as shown in FIG. 40, by using a hollow cylindrical flow path;
FIG. 42 is schematic plan views showing an embodiment in which liquid is sampled in a prescribed amount in a closed or opened two-dimensional flow path;
FIG. 43 is schematic diagrams illustrating an embodiment in which liquid is sampled in a prescribed amount in a closed or opened two-dimensional flow path every time a predetermined time elapses, and in which changes with time are observed;
FIG. 44 is diagrams schematically showing an embodiment in which the closed or opened two-dimensional flow path is washed;
FIG. 45 is a diagram schematically showing an embodiment in which a part of the flow path is replaced if it is contaminated;
FIG. 46 is a schematic diagram showing an embodiment in which the flow path is sequentially washed by interposing drops of the washing liquid between liquid drops that are being sequentially transported, thus preventing contamination of the liquid drops;
FIG. 47 is diagrams schematically illustrating an embodiment in which illumination light is applied to the closed or opened two-dimensional flow path, photographing the flow path and thereby monitoring the motion of a liquid drop;
FIG. 48 is diagrams showing an embodiment in which a liquid drop being transported by the liquid transporting means shown in FIG. 1 is monitored in terms of position;
FIG. 49 is a sectional view depicting an embodiment in which a liquid drop being transported by the liquid transporting means shown in FIG. 1 is monitored in terms of position by means of spatial frequency filtering;
FIG. 50 is a perspective view (a) and plan view (b), both showing an embodiment in which liquid drops arranged in a two-dimensional flow path are sorted or rearranged;
FIG. 51 is schematic perspective views illustrating a liquid processing unit;
FIG. 52 is schematic perspective views showing an embodiment in which process units are used in any combination, thereby to perform various processes on liquid; and
FIG. 53 is a schematic perspective view showing an embodiment having a circular flow path in which a liquid processing unit and a liquid characteristic detecting unit are arranged, respectively to process liquid and detect the characteristics of the liquid processed.

### Best Mode for Carrying out the Invention

An embodiment of a liquid transporting/processing device according to this invention will be described, with reference to the accompanying drawings.

The basic type of a liquid transporting means will be explained first.

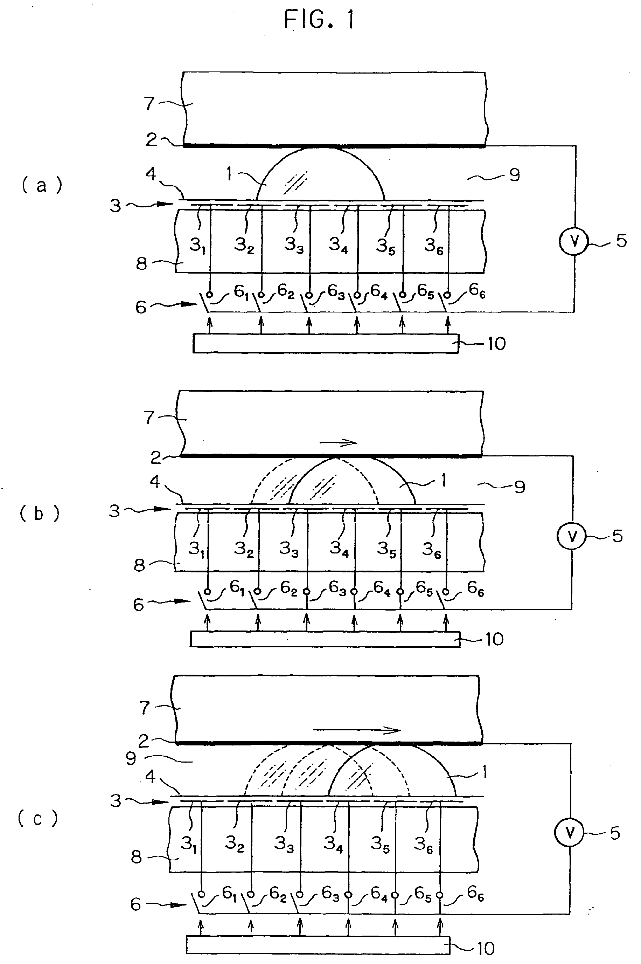

FIG. 1 is diagrams for explaining the operating principle of a liquid transporting means according to the first embodiment, which utilizes the electro-wetting phenomenon. As FIG. 1(a) shows, a substrate 7 and a substrate 8 are arranged parallel, facing each other. A predetermined gap 9 is provided between the substrate 7 and the substrate 8. A second electrode is provided on the inner surface of one substrate 7, which faces the other substrate 8. The second electrode is a common electrode (common electrode film) 2. The common electrode 2 is made of water-repellant material that is stable to chemical reactions, such as gold. A first electrode is provided on the inner surface of the other substrate 8, which faces the substrate 7. The first electrode is a set or group 3 of many divided electrodes 3₁ to 3₆. The divided electrodes 3₁ to 3₆ are arranged parallel to one another. The surfaces of the divided electrodes of the group 3 are covered with an insulating film 4 that is an amorphous fluorocarbon resin (e.g., Cytop (tradename), manufactured by Asahi Glass Co., Ltd.) film or an SiO₂ film. Thus, the predetermined gap is, more precisely, the distance from the common electrode 2 to the insulating film 4.

As described above, the gap 9 having a predetermined distance is provided between the substrate 7 and the substrate 8. The gap 9 is so narrow that a liquid drop 1 of, for example, about 1 µl (microliter) lies alone in it, contacting the command electrode 2 and the insulating film 4. The liquid drop 1 may be of either electrolyte solution or insulating solution. In FIG. 1, the liquid drop 1 is depicted as wetting the insulating film 4 relatively well. If the surface energy of the insulting film 4 is low, the liquid drop 1 will lie alone in the gap 9, in the form of almost a sphere.

A power source 5 is provided between the common electrode 2 and the group 3 of divided electrodes 3₁ to 3₆. The power source 5 may be a DC power source or an AC power source. A group 6 of switches is connected to the group 3 of divided electrodes 3₁ to 3₆ of the group 3. Switches 6₁ to 6₆ of the group 6 are connected to the divided electrodes 3₁ to 3₆ of the group 3, in one-to-one fashion. Of the switches of the group 6, the switch 6₃ may be closed. Then, a voltage is applied from the DC power source 5 to the divided electrode 3₃ that corresponds to the switch 6₃. The switches 6₁ to 6₆ of the group 6 are connected to a control device 10. The control device 10 can therefore control the opening and closing of each switch.

Assume that the control device 10 opens all switches 6₁ to 6₆ of the group 6. This state is shown in FIG. 1 (a) . In this state, no force is exerted on the liquid drop 1 that is positioned in the gap 9, namely between the common electrode 2 and the insulting film 4. The liquid drop 1 therefore remains at the same position. The control device 10 closes the switches 6₃, 6₄ and 6₅ at the same time, as illustrated in FIG. 1(b).

Thus, the switch 6₃ is connected to the divided electrode 3₃, the switch 6₄ is connected to the divided electrode 3₄, and the switch 6₅ is connected to the divided electrode 3₅. The divided electrodes 3₃ and 3₄ are located at the right part of the liquid drop 1 stayed at the first position, and the divided electrode 3₅ is located on the right side of the divided electrodes 3₃ and 3₄. Therefore, a voltage, e. g. , a positive voltage, is applied to the common electrode film 2 from one electrode of the power source 5. The positive voltage attracts positive ions via the liquid drop 1 to that surface of the liquid drop 1 which contacts the insulating film 4 if the liquid drop 1 is electrolyte, and causes polarization, attracting a positive charge to that surface of the liquid drop 1 which contacts the insulating film 4 if the liquid drop 1 is insulating material. Meanwhile, a negative charge is applied from the other electrode of the DC power source 5 to the divided electrodes 3₃, 3₄ and 3₅ via the switches 6₃, 6₄ and 6₅, and is accumulated in the surfaces of these electrodes, which contact the insulating film 4. At this time, the center of the positive charge accumulated in that surface of the liquid drop 1 which contacts the insulating film 4 is located at the left part of the figure, and the center of the negative charge accumulated in the surfaces of the electrodes 3₃, 3₄ and 3₅, which contact the insulating film 4, is located on the right part of the figure. The positive charge and the negative charge are displaced from each other. Hence, an electrical attraction acts on the liquid drop 1, which moves from the position indicated by the broken line to the position indicated by the solid line.

Next, the switch 6₃ connected to the divided electrode 3₃ is opened, and the switch 6₆ connected to the divided electrode 3₆ is closed. This state is illustrated in FIG. 1(c). The divided electrode 3₃ is an electrode located at the left part of the liquid drop 1 lying at the position (broken line) shown in FIG. 1 (b) . On the other hand, the divided electrode 3₆ is an electrode located at the right part of the liquid drop 1 lying at the position (broken line). The liquid drop 1 further moves in the direction of the arrow, from the position indicated by the broken line to the position indicated by the solid line, for the same reason it moved as shown in FIG. 1(b).

Thus, the liquid transporting means (liquid transporting device) according to this invention comprises the common electrode 2, a plurality of divided electrodes 3₁ to 3₆, insulating film 4 provided on the surfaces of the divided electrodes 3₁ to 3₆ and control device 10 that controls the voltages applied to the divided electrodes 3₁ to 3₆, respectively. The gap between the common electrode 2 and the insulating film 4 is so narrow that a liquid drop 1 contacts both the electrode 2 and the film 4. To move the liquid drop 1 on and along the insulating film 4, the control device 10 applies a voltage, on and off, to the divided electrodes 3₁ to 3₆ that are arranged parallel to one another. Therefore, the liquid drop 1 can be moved in a prescribed direction.

In the above explanation, the power source 5 is a DC power source. Instead, it may be an AC power source. If this is the case, the liquid drop 1 moves in the direction the switches 6₁ to 6₆ of the group 6 are sequentially closed.

In the liquid transporting means according to the first embodiment, shown in FIG. 1, the liquid drop 1 moves because the contact angle that the liquid drop 1 has at its left and right skirts with respect to the insulating film 4 is unstable due to electro-wetting phenomenon if the voltage distribution is asymmetrical, or if different voltages are applied to the left and right parts of the liquid drop 1. It is therefore desired that the surface of the insulating film 4 be as much water-repellant as possible as long as no voltage is applied. Hence, the surface of the insulating film 4 may be covered with a water-repellant layer 11 that is an amorphous fluorocarbon resin (e.g., Cytop (tradename), manufactured by Asahi Glass Co., Ltd.) . In this case, the liquid drop 1 can move more smoothly.

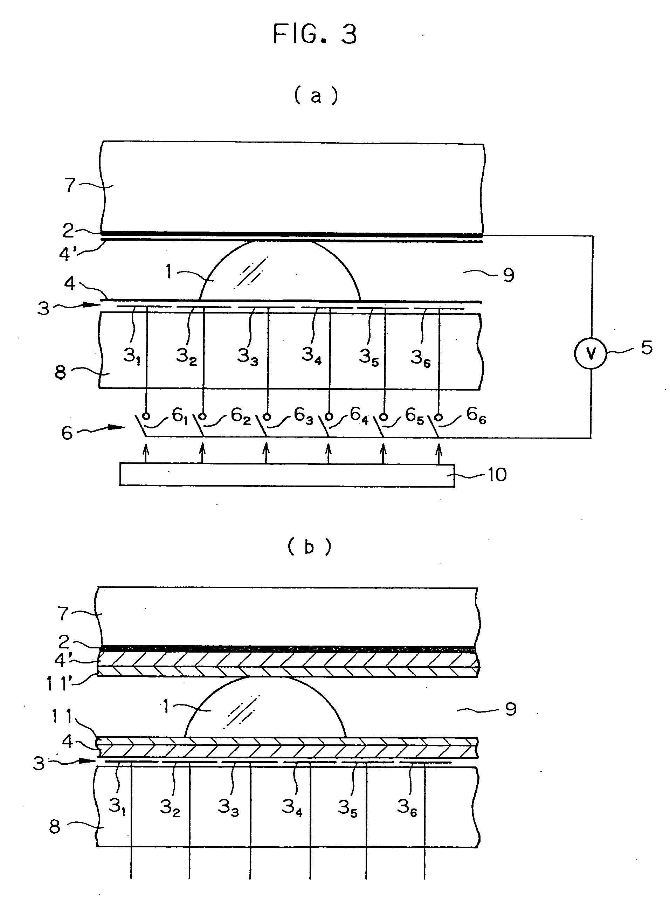

FIG. 3(a) is a sectional view showing the configuration of a liquid-transporting means according to a second embodiment, which utilizes the electro-wetting phenomenon. This figure corresponds to FIG. 1(a). This embodiment differs from the embodiment of FIG. 1 only in that the surface of the common electrode (common electrode film) 2 is also covered with an insulating film 4' such as amorphous fluorocarbon resin film or SiO₂ film. The liquid drop 1 is transported in the same way as in the embodiment of FIG. 1, wherein the drop 1 is of insulating liquid. As in the embodiment of FIG. 1, the control device 10 controls, on and off, the switches 6₁ to 6₆ of the group 6, to apply, on and off, the voltage to the divided electrodes 3₁ to 3₆ of the group 6 sequentially, thus moving the liquid drop 1 in a prescribed direction.

In the liquid transporting means according to the second embodiment, too, it is desired that the insulating films 4 and 4' be as much water-repellant as possible so long as no voltage is applied to them. It is therefore desirable to provide water-repellant layers 11 and 11' on the surfaces of the insulating films 4 and 4', respectively, as shown in FIG. 3(a), in order to move the liquid drop 1 smoothly.

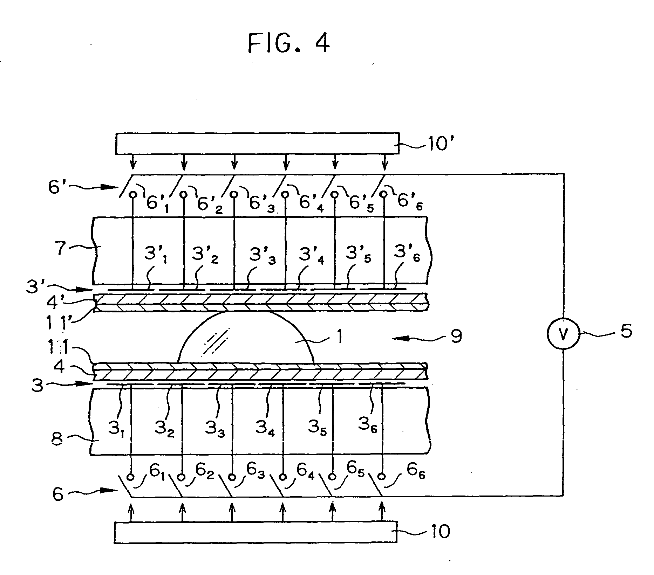

FIG. 4 is a diagram illustrating the configuration of a liquid transporting means that is a modification of the second embodiment. In the modification, many divided electrodes 3'₁ to 3'₆ constituting a group 3', which are similar to the divided electrodes 3₁ to 3₆, are arranged on the substrate 7, instead of the common electrode (common electrode film) 2; the surfaces of these divided electrodes are covered with the insulating film 4'; and the water-repellant layers 11 and 11' are provided, if necessary, on the surfaces of the insulating films 4 and 4' arranged on both sides. To the group 3' of divided electrodes, the group 6' of switches 6'₁ to 6'₆ is connected. The switches 6'₁ to 6'₆ of the group 6' are connected to the divided electrodes 3'₁ to 3'₆ of the group 3' in one-to-one fashion. And the switches 6' to 6'₆ of the group 6' are connected to another control unit 10'. The control device 10' controls the switches 6'₁ to 6'₆ of the group 6' to open and close them.

In this case, the control device 10 and the control device 10' cooperate, sequentially controlling, on and off, the switches 6'₁ to 6'₆ that are located above and below, thereby to apply, on and off, a voltage between the divided electrodes 3₁ to 3₆ and the divided electrodes 3'₁ to 3'₆. Thus, the liquid drop 1 can be moved in the 3'₁ to 3'₆.

In this case, the contact angles that the liquid drop 1 has at its left and right skirts with respect to the insulating film 4 are unbalanced at positions above and below the liquid drop 1, due to electro-wetting phenomenon. This enables the liquid drop 1 to move more easily.

In the case shown in FIG. 4, the liquid drop is supposed to move to the left or the right in the plane of the drawing. Nonetheless, the divided electrodes 3₁ to 3₆ and 3'₁ to 3'₆ may be elongated and extend parallel, and the lengthwise direction of the divided electrodes 3₁ to 3₆ located below may be at right angles to the lengthwise direction of the divided electrodes 3'₁ to 3'₆ located above, thus providing an electrode assembly of simple-matrix driven type. Then, the liquid drop 1 can be moved in an XY plane, or in two-dimensional directions (see the embodiments hereinafter described).

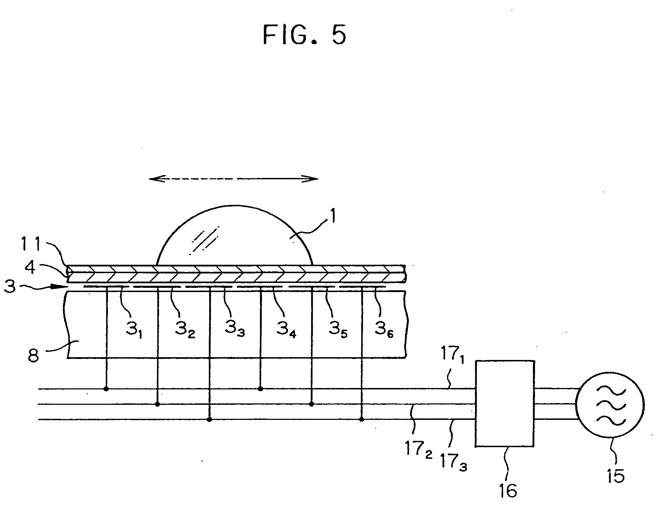

FIG. 5 is a diagram that explains the operating principle of a liquid transporting means according to the third embodiment, which transports a liquid drop by utilizing dielectrophoresis and an electric field that rotates a progressive wave. As FIG. 5 shows, this liquid transporting means has many divided electrodes 3₁ to 3₆ forming a group 3, which are provided on the surface of the substrate 8. The surfaces of the divided electrodes of the group 3 are covered with an insulating film 4. A water-repellant layer 11 is provided, if necessary, on the surface of the insulating film 4. Liquid is dripped onto the surface of the water-repellant layer 11, thus forming a liquid drop 1.

A three-phase AC power source 15 is prepared as power source. The three wires 17₁ to 17₃ extending from the three-phase AC power source 15 are connected via a phase-controlling circuit (switch/phase control circuit) 16 to the divided electrodes 3₁ to 3₆ of the group 3. The divided electrodes 3₁ and 3₄, 3₂ and 3₅, and 3₃ and 3₆ are connected to the wires 17₁ to 17₃, respectively. In the case of FIG. 5, the switch/phase control circuit 16 advances or delays the AC voltage applied to the wire 17₁ in phase by 120°, maintains the AC voltage applied to the wire 17₂ in phase, neither advanced nor delayed, and delays or advances the AC voltage applied to the wire 17₁ in phase by 120°.

The switch/phase control circuit 16 thus controls the phases of the AC voltages. As a result, the AC voltage applied to the wire 17₁ (divided electrodes 3₁ and 3₄) advances in phase by 120° with respect to the AC voltage applied to the wire 17₂ (divided electrodes 3₂ and 3₅), and the AC voltage applied to the wire 17₃ (divided electrodes 3₃ and 3₆) delays in phase by 120° with respect to the AC voltage applied to the wire 17₂ (divided electrodes 3₂ and 3₅). Then, an electric field that rotates a progressive wave is generated on the surface of the water-repellant layer 11, as indicated by the solid-line arrow. A force is applied to the liquid drop 1 in the direction of the solid-line arrow, moving the drop 1 to the right by virtue of dielectrophoresis. When an AC voltage, which delays in phase by 120° with respect to the AC voltage applied to the wire 17₂ (divided electrodes 3₂ and 3₅), is applied to the wire 17₃ (divided electrodes 3₃ and 3₆) , an electric field that rotates a progressive wave is generated on the surface of the water-repellant layer 11, as indicated by the broken-line arrow. Thus, a force is applied to the liquid drop 1 in the direction of the broken-line arrow, moving the drop 1 to the left by virtue of dielectrophoresis.

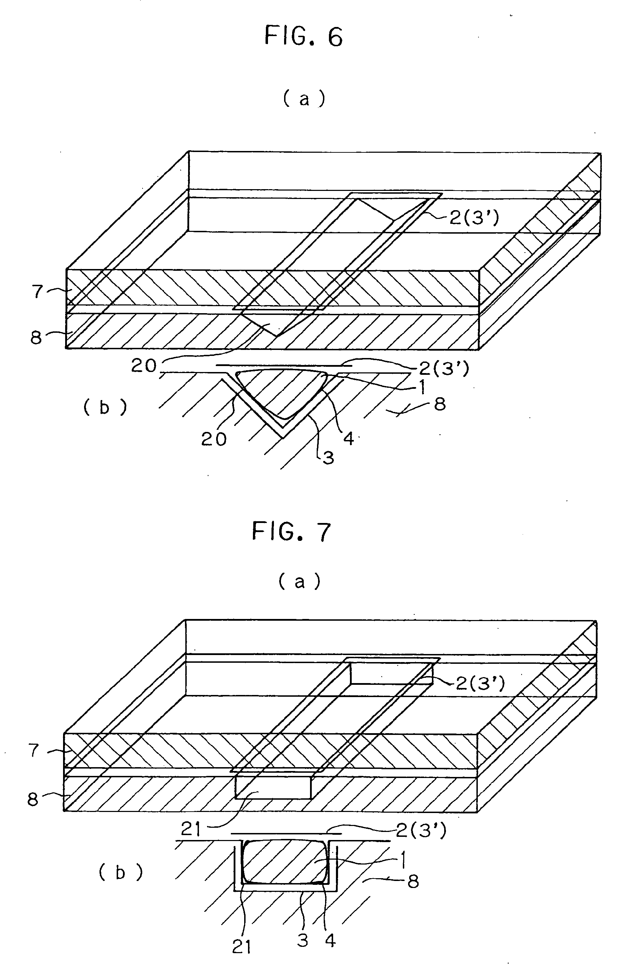

A flow path that adopts any one of the liquid transporting means according to the first to third embodiments described above will be explained. FIG. 6 is a perspective view (a) and a partly sectional view (b), both showing an embodiment that has a flow path with a cross section shaped like a V groove. In this configuration, the substrate 8 has a V groove 20 that guides a liquid drop 1. A group of divided electrodes and an insulating film 4 are provided on the bottom of the V groove 20. The insulating film 4 covers the divided electrodes. In the first and second embodiments, the substrate 7 is laid on the substrate 8 in which the V groove 20 is made, forming one unit. In this configuration, the common electrode 2 or the divided electrode group 3' (modification of the second embodiment) is arranged over the V groove 20, interposed between the substrate 7 and the substrate 8. In the second embodiment, the insulating film 4' covers the surface of the common electrode 2 or divided electrode group 3', which contacts the liquid drop 1. In the third embodiment, the common electrode 2 and substrate 7 or the divided electrode group 3' are not used.

FIG. 7 is a perspective view (a) and a partly sectional view (b) , both showing an embodiment that has a flow path having a rectangular cross section. This configuration differs from the configuration of FIG. 6, only in that it has a rectangular groove 21, instead of the V groove 20 shown in FIG. 6. Thus, this configuration will not be described in detail.

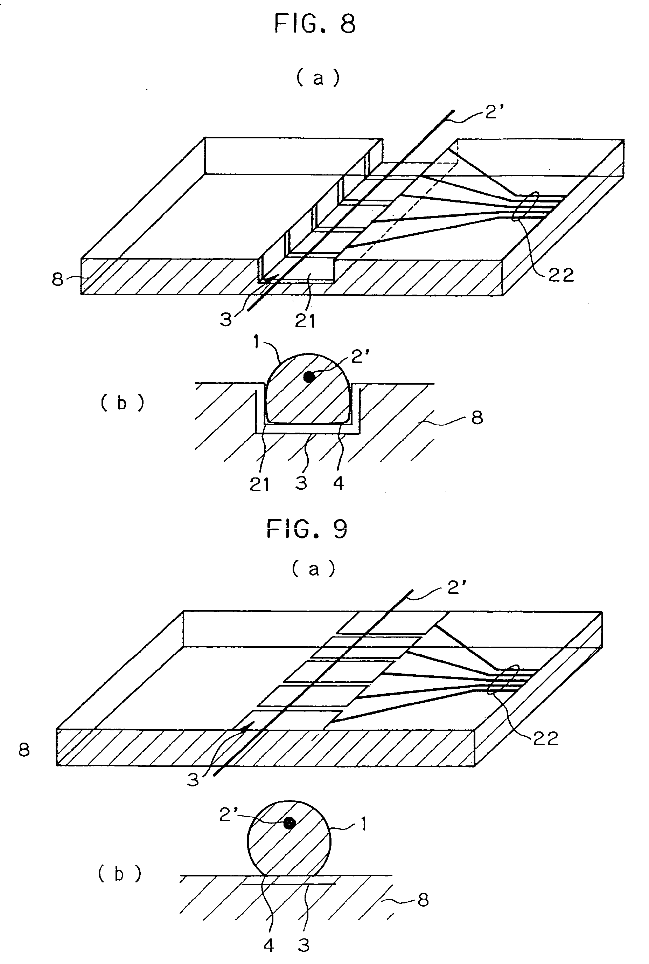

FIG. 8 shows a flow path for the first embodiment. It is a perspective view (a) and a partly sectional view (b), both showing a flow path that has a rectangular cross section and a linear common electrode. In this configuration, the substrate 8 has a rectangular groove 21 and designed to guide the liquid drop 1. A group 3 of divided electrodes and an insulting film 4 are provided on the bottom of the rectangular groove 21. The insulating film 4 covers the divided electrodes. In FIG. 8, reference numeral 22 designates the wires that are connected to the divided electrodes of the group 3. A linear electrode 2', which constitutes a common electrode, is provided in or above the groove 21, extending along the groove 21. The groove 21 having a rectangular cross section is open at the top. The linear electrode 2' may not be used, thus providing a flow path for the third embodiment.

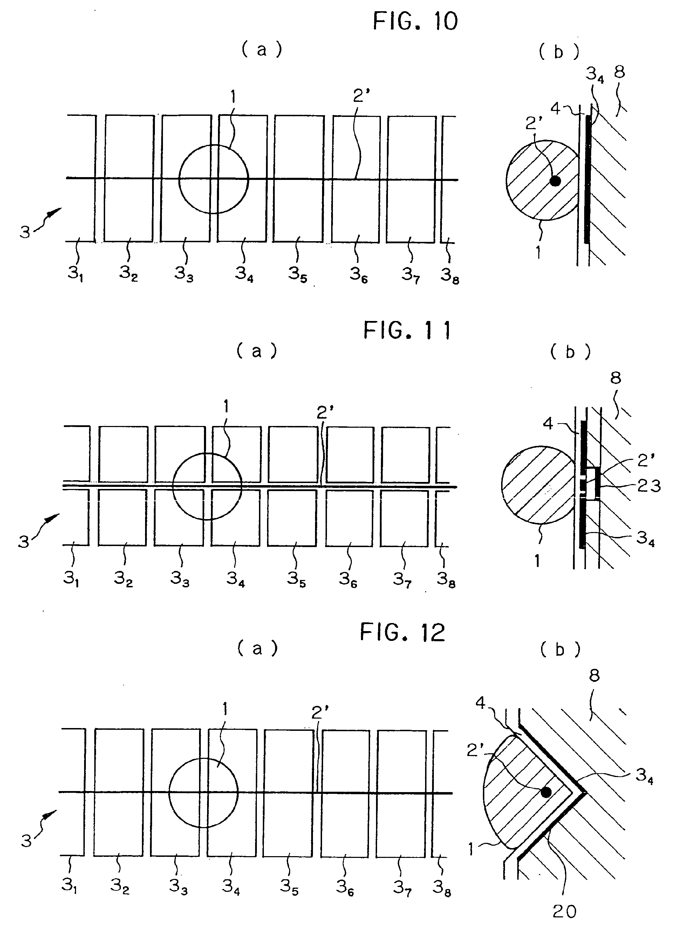

FIG. 9 shows a flow path for the fist embodiment, too. It is a perspective view (a) and a partly sectional view (b) , both showing a flow path that is planer and has a linear common electrode. In this configuration, the electrode 8 is planer, having no grooves for guiding the liquid drop 1. A group 3 of divided electrodes and an insulating film 4 are provided on the guiding part. The insulating film 4 covers the divided electrodes. Connecting wires 22 are connected to the divided electrodes, respectively. A linear electrode 2', which constitutes a common electrode, is arranged over the group 3 of divided electrodes, extending along the group 3. The flow path is open at the top. In this case, too, the linear electrode 2' may not be used, thus providing a flowpath for the third embodiment .

Specific examples of the group 3 of divided electrodes and the linear electrode 2', i.e., common electrode, which are arranged along the flow path, will be described below.

FIG. 10 is a perspective view (a) and a partly sectional view (b) , both showing the arrangement of a group 3 of divided electrodes and a linear electrode 2' laid in the flow path shown in FIG. 9. The group 3 consists of rectangular divided electrodes 3₁ to 3₈, which are arranged on the substrate 8 along the flow path and spaced apart from one another. An insulating film 4 covers the divided electrodes of the group 3. The linear electrode 2', which constitutes a common electrode, is arranged over the group 3 of divided electrodes, extending along the row of the divided electrodes.

FIG. 11 shows a modification of the arrangement illustrated in FIG. 10. In this arrangement, the divided electrode group 3 is divided into two parts, i.e., left part and right part. The divided electrodes 3₁ to 3₈ of each part are connected to a connection wire 23 that is buried in the substrate 8. The linear electrode 2' is arranged below the insulating film 4 and between the two parts of the group 3. Thus, this arrangement is a liquid-transporting means of the second embodiment, which is a planar type. The insulating film 4 may not cover the linear electrode 2' arranged between the two parts of the group 3. In this case, the arrangement will be a liquid transporting means of the first embodiment, which is a planar type. The configuration of FIG. 11, which is planer, can be rolled to provide a hollow cylindrical liquid transporting means.

FIG. 12 shows a modification of the arrangement illustrated in FIG. 10. In this arrangement, the divided electrodes 3₁ to 3₈ of the group 3 are arranged on and along the bottom of the V groove 20 that constitutes a flow path. The V groove 20 corresponds to the rectangular groove 21 shown in FIG. 8. In this configuration, each divided electrode of the group 3 can contact the liquid drop 1 at a larger area and can therefore exerts a greater attraction for transporting the liquid.

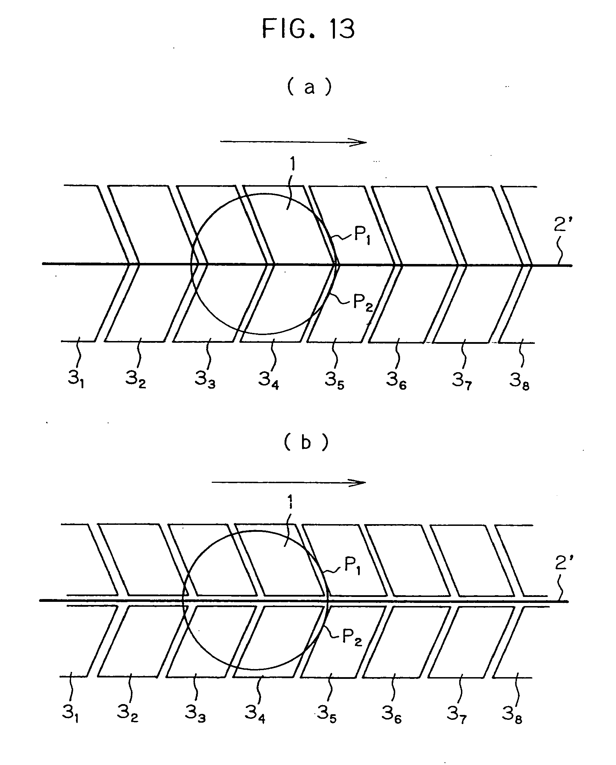

FIG. 13 is plan views illustrating divided electrodes that are modified in shape. FIG. 13(a) and FIG. 13(b) are plan views that correspond to FIG. 10 and FIG. 11, respectively, each illustrating the arrangement of the divided electrode group 3 and common electrode 2' . FIG. 13(a) and FIG. 13(b) show divided electrodes 3₁ to 3₈ that are so shaped to move the liquid drop 1 efficiently in the direction of the arrow. The divided electrodes of either group 3 are designed to move the liquid drop 1 from the left to the right. The divided electrodes 3₁ to 3₈ shown in FIG. 13(a) and 13(b) are shaped like ">", as viewed from above. Hence, the liquid drop 1 first contacts any one of the divided electrodes 3₁ to 3₈, at two points P1 and P2, as it moves from the left to the right. As the liquid drop 1 moves from the right to the left in FIG. 13, it first contacts any one of the divided electrodes 3₁ to 3₈, at one point, or the distal center of the divided electrode. Thus, the attraction acting at the two points, in the direction of the arrow, i.e., from the left to the right, is greater than the attraction acting at one point, from the right to the left. The liquid drop 1 can therefore be moved more smoothly in the direction of the arrow.

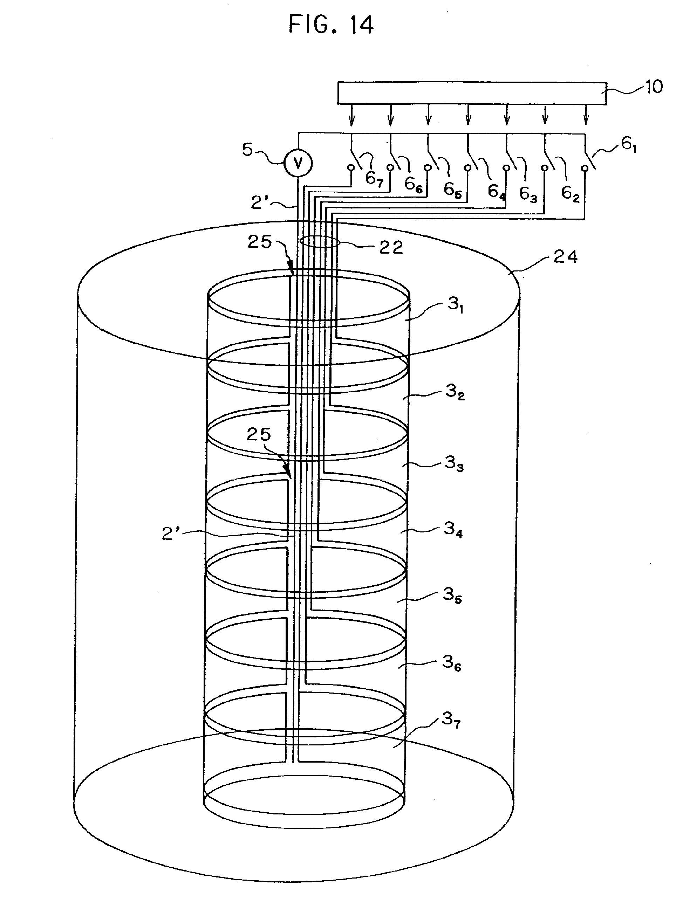

FIG. 14 is a see-through perspective view of a hollow cylindrical liquid-transporting means formed by rolling the planer-type of FIG. 11. This liquid transporting means comprises a hollow cylinder (pipe) 24 and divided electrodes 3₁ to 3₇ constituting a group 3. The divided electrodes 3₁ to 3₇ are provided on the inner surface of the hollow cylinder 24. The divided electrodes 3₁ to 3₇ are spaced apart from one another in the axial direction of the hollow cylinder 24. Each divided electrode is arched along the inner circumference of the hollow cylinder 24. A region 25 is provided between the ends of each of the arched divided electrodes 3₁ to 3₇. In this region 25, there are provided a common electrode 2' and connection wires 22 connected to the divided electrodes 3₁ to 3₇. The wires 22, which extend through the hollow cylinder 24 (i.e., region 25) connect the divided electrodes 3₁ to 3₇ to switches 6₁ to 6₇, respectively. Though not shown, an insulating film 4 is provided on the entire inner surface of the hollow cylinder 24 and covers the divided electrodes 3₁ to 3₇ and, wires 22 connected to the electrodes and the linear electrode 2' . The linear electrode 2' , or common electrode, is connected to one pole of a power source 5. Similarly, the divided electrode group 3 is connected via the switch group 6 to the other pole of the power source 5. A control device 10 controls the switches 6₁ to 6₇ of the group 6, opening or closing each switch.

In the configuration of FIG. 14, the control device 10 controls the switches 6₁ to 6₇ one after another, opening or closing each switch. Thus, a voltage can be applied, on and off, to the divided electrode group 3. The voltage is applied to the divided electrodes sequentially, for example, to the uppermost divided electrode at first, and to the lowermost divided electrode at last. The liquid drop 1 in the hollow cylinder 24 can therefore be moved downwards.

As in the configuration of FIG. 11, the insulating film 4 may not cover the linear electrode 2' in the region 25 in the configuration illustrated in FIG. 14.

Divided electrode groups 3 and 3' will be described, which are of the type that moves the liquid drop 1 in a desired direction along the surfaces of substrates 7 and 8 that define a flow path between them as is illustrated in FIG. 1.

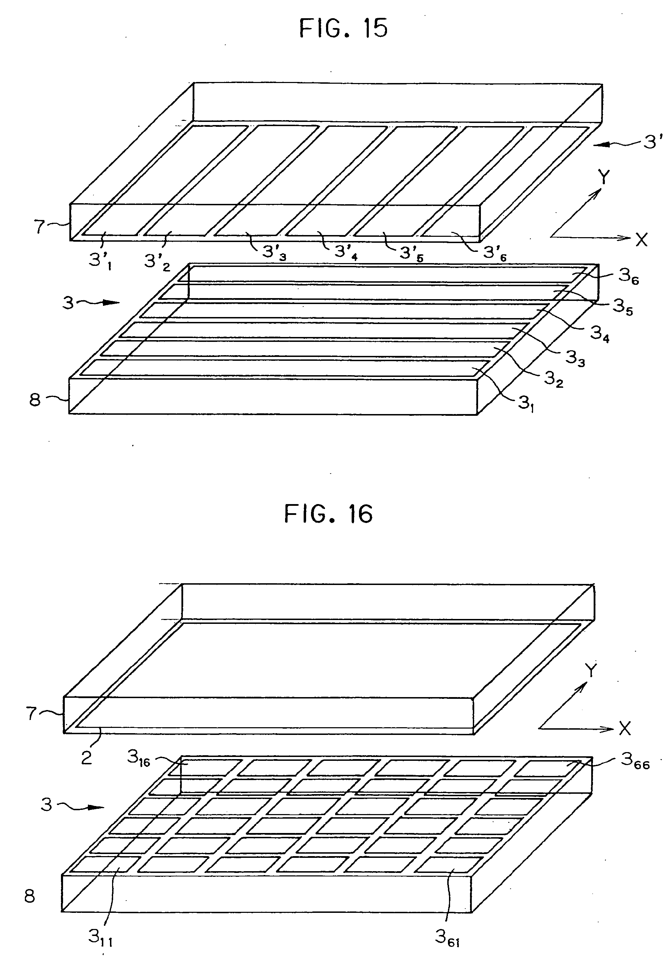

FIG. 15 is an exploded perspective view of a two-dimensional liquid transporting means that is a modification of the second embodiment shown in FIG. 4. The insulating films 4 and 4' arranged on the surfaces of the divided electrode groups 3 and 3', respectively, are not shown in FIG. 15. The divided electrodes 3₁ to 3₆ of the group 3, which are provided on the substrate 8, are elongated electrodes that extend parallel to one another and in the X direction in the surface of the substrate 8. The divided electrodes 3' ₁ to 3' ₆ of the group 3', which are provided on the substrate 7, are elongated electrodes that extend parallel to one another and in the Y direction in the surface of the substrate 7. Thus, an electrode assembly of simple-matrix driven type, which is of the type used in liquid crystal displays. In the divided electrode groups 3 and 3', an electric field is applied at the intersection of any selected divided electrode of the group 3 and any selected divided electrode of the group 3', each applied with a voltage. Thus, a liquid drop 1 moves in the flow path defined by the substrates 7 and 8, from one intersection to another.

FIG. 16 is an exploded perspective view of a two-dimensional liquid transporting means that is a modification of the first embodiment shown in FIG. 1 or a modification of the second embodiment shown in FIG. 3. In this figure, the insulating film 4 arranged on at least the surfaces of the divided electrodes is not illustrated. In this case, the common electrode 2 is arranged on the entire inner surface of the substrate 7, and the divided electrode group 3 arranged on the side of the substrate 8 is a set of divided electrodes 3₁₁, 3₁₂, ... 3₁₆, 3₂₁, ... 3₆₁, ... 3₆₆. With this configuration composed of common electrode 2 and divided electrode group 3, a liquid drop 1 moves in the flow path between the substrates 7 and 8, from one divided electrode to another, in the order these electrode have been selected and applied with a voltage.

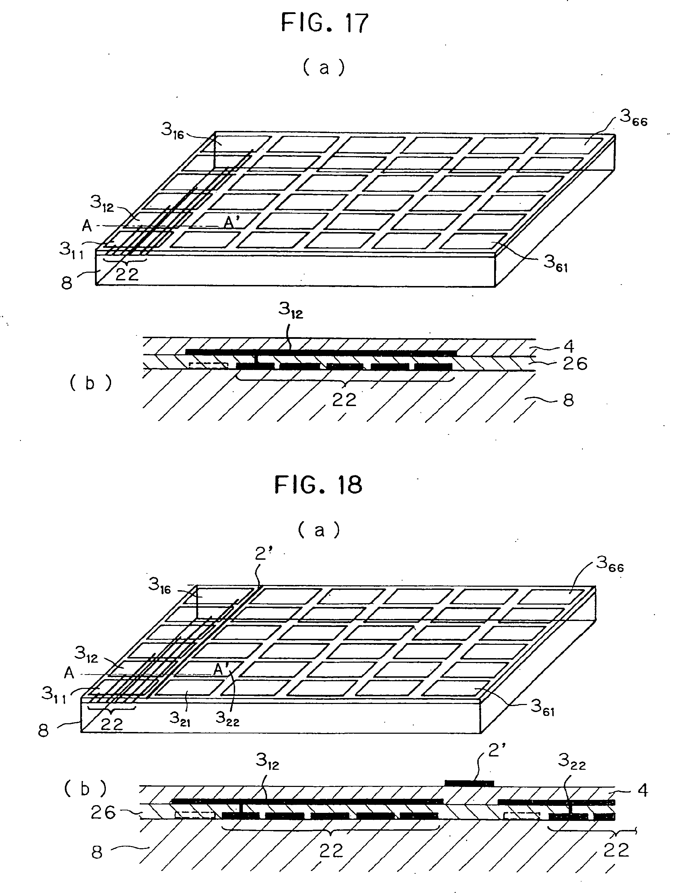

FIG. 17 is a perspective view (a) and a sectional view (b) taken along line A-A' shown in FIG. 17(a) . Both figures show how wires are connected to the divided electrodes 3₁₁ to 3₆₆ of the group 3 in the configuration illustrated in FIG. 16. The divided electrodes 3₁₁ to 3₆₆ are arranged on the substrate 8, in rows and columns, forming a two-dimensional array. Wires 22 to be connected to the divided electrodes 3₁₁ to 3₆₆ are patterned on the substrate 8. An insulating film 26 is laid on the divided electrodes. The wires 22 are connected to the divided electrodes 3₁₁ to 3₆₆, respectively, via the insulating film 26, and are led together from an edge of the substrate 8. The divided electrodes 3₁₁ to 3₆₆ are patterned on the insulating film 26 and spaced apart from one another, forming a two-dimensional array. An insulating film 4 is provided on the surface of the divided electrode group 3.

FIG. 18 illustrates a two-dimensional liquid transporting means, which is a modification of the first embodiment and which has a planer flow path. FIG. 18 (a) is an exploded perspective view, and FIG. 17(b) is a sectional view taken along line A-A' in FIG. 17(a). As in the means shown in FIG. 17, wires 22, which are to be connected to the divided electrodes 3₁₁ to 3₆₆, respectively, are formed by patterning one layer in this liquid-transporting means. An insulating film 26 is arranged on the wires 22. Through the insulting film 26, the wires 22 are connected to the divided electrodes 3₁₁ to 3₆₆, respectively. The wires 22 are led together from an edge of the substrate 8. The divided electrodes 3₁₁ to 3₆₆ are patterned on the insulating film 26 and spaced apart from one another in X direction and Y direction, forming a two-dimensional array. Thus, the divided electrode group 3 is a set of divided electrodes 3₁₁, 3₁₂, ... 3₁₆, 3₂₁, ... 3₆₁, ... 3₆₆ that have been formed by patterning. An insulating film 4 is provided on the surface of the divided electrode group 3. A linear common electrode 2' is arranged and fixed above the blank parts that lie between two columns of divided electrodes, one consisting of electrodes 3₁₁ to 3₁₆, the other consisting of electrodes 3₂₁ to 3₂₆. Thus, the wires 22, the divided electrode group 3 and the linear common electrode 2' constitute a three-layer structure. In this liquid-transporting means, the common electrode 2' faces the divided electrodes 3₁₁, 3₁₂, ... 3₁₆, 3₂₁, ... 3₆₁, ... 3₆₆, only at the lower surface of the liquid drop 1. The liquid drop 1 does not contact any member at its upper surface. Namely, the flow path is an opened type.

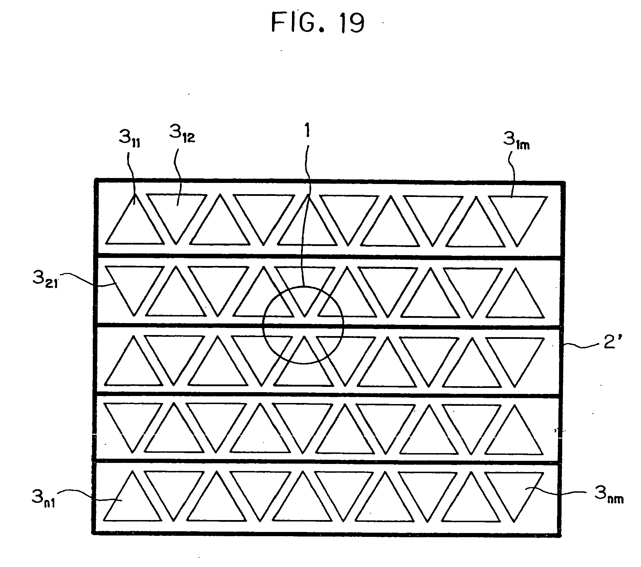

FIG. 19 is a plan view of a two-dimensional liquid transporting means according to the first embodiment, in which the flow path is planer and open in the same way as shown in FIG. 18. In this liquid transporting means, the divided electrodes 3₁₁ to 3₁ₘ, 3₂₁ to 3₂ₘ, ... 3ₙ₁ to 3ₙₘ are not rectangular, but triangular. As FIG. 19 shows, the divided electrodes have been formed by dividing a single electrode in two dimensions and are arranged in a two-dimensional plane. An insulating film 4 (not shown) covers the entire surface of the divided electrode group 3. Further, parallel common electrodes 2' that are either linear or shaped like comb teeth are provided on the insulating film 4 and are exposed. A liquid drop 1 is placed on this substrate, and a voltage is applied on and off, sequentially on the divided electrodes 3₁₁ to 3₁ₘ, 3₂₁ to 3₂ₘ, ... 3ₙ₁ to 3ₙₘ. The liquid drop 1 is thereby moved in any desired two-dimensional direction.

In the cases of FIG. 18 and FIG. 19, too, an insulating film can cover the upper surface of the common electrode that lies exposed, as in the case shown in FIG. 11, thus providing a liquid transporting means according to the second embodiment.

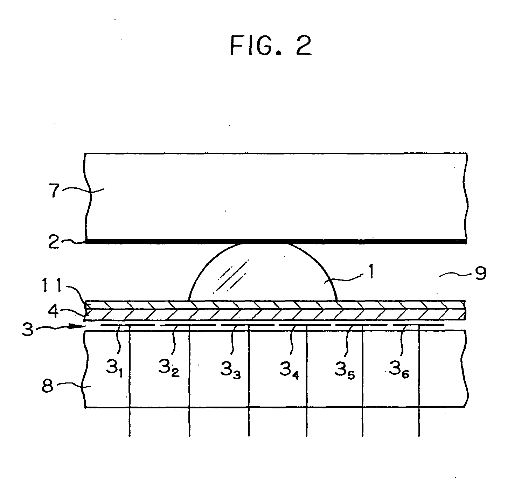

It will be explained how such a liquid transporting means as described above, which has a linear or planer flow path, is used to perform various processes (controls) on liquid. Unless otherwise noted, the liquid transporting means of the configuration shown in FIG. 1 to FIG. 19 can be used to do so.

First, a process (control) of mixing and stirring liquid will be described.

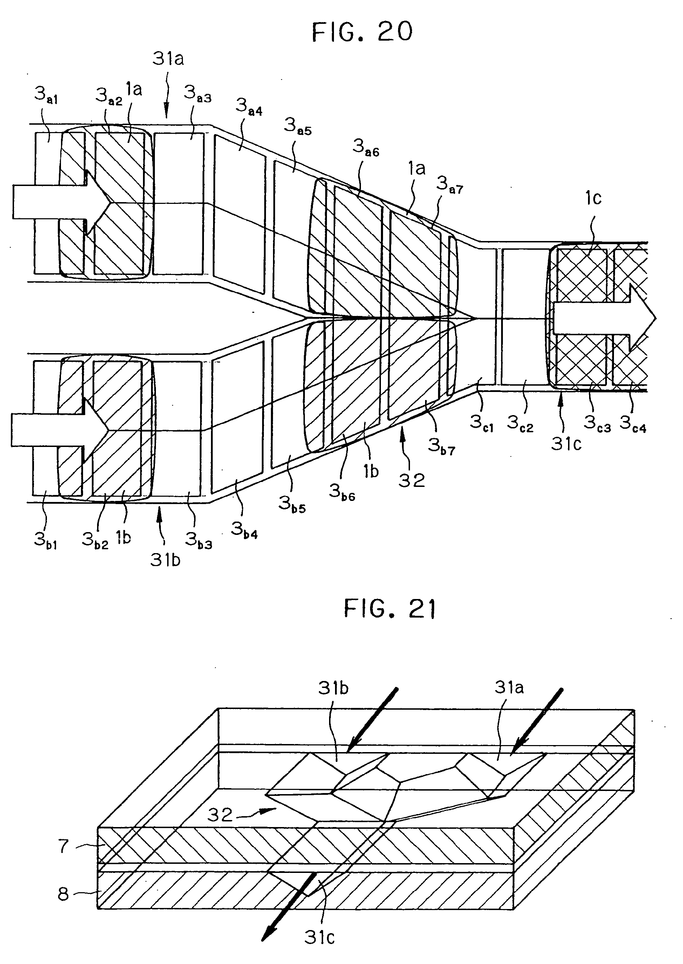

FIG. 20 is a schematic diagram showing an example in which linear flow paths are combined into one, thus mixing two liquids. In this example, two flow paths 31a and 31b runs side by side in a parallel region (confluence region) 32 and are then combined into one flow path 31c. The voltages applied to the divided electrodes 3ₐ₁ to 3ₐ₇ provided in the path 31a and the divided electrodes 3_{b1} to 3_{b7} provided in the path 31b are sequentially controlled. The liquid drops 1a and 1b being transported in the direction of the arrow in the flow paths 31a and 31b, respectively, are thereby moved side by side in the parallel region 32 and made to contact. In the flow path 31c, the voltages applied to the divided electrodes 3_{c1} to 3_{c4} are sequentially controlled, thus transporting the liquid drop 1c, i.e., a combination of the liquid drops 1a and 1b in the direction of the arrow.

FIG. 21 is a see-through perspective view schematically showing a liquid transporting means of closed type, which is a liquid transporting/processing device for mixing liquids and which path has a cross section shaped like a V groove. Although this liquid transporting means is not illustrated in detail, its structure and operation will be apparent from the above explanation.

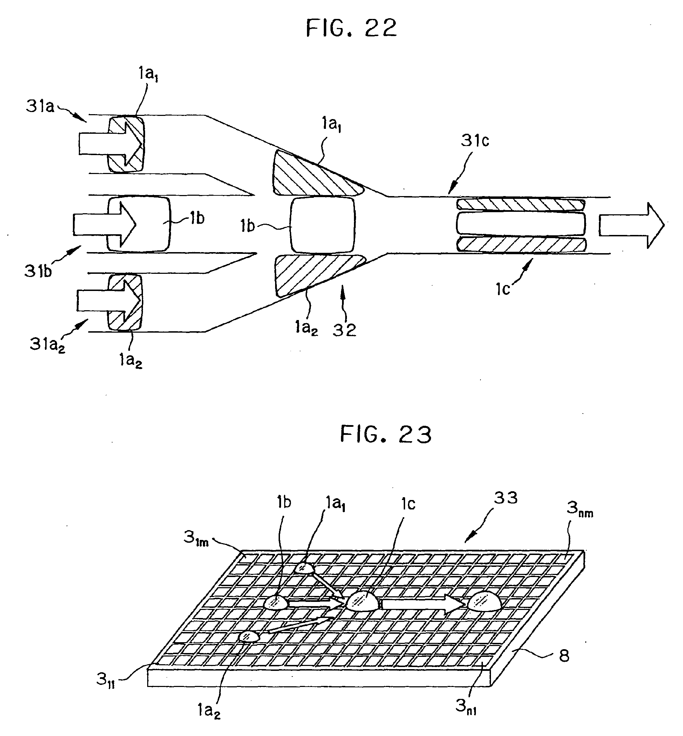

FIG. 22 is a schematic representation of a modification of the embodiment shown in FIG. 20. In this case, two flow paths 31ₐ₁, and 31ₐ₂ for transporting one liquid are laid on sides of a flow path 31b for transporting another liquid, and the three flow paths are combined into one flow path 31c. That is, three flow paths 31ₐ₁, 31ₐ₂ and 31b run parallel in a parallel region 32 and are then combined into one flow path 31c. Two drops 1ₐ₁ and 1ₐ₂ of one liquid that is transported in the flow paths 31ₐ₁ and 31ₐ₂ are transported in the direction of the arrow, a drop 1b of another liquid is transported in the middle flow path 31b in the direction of the arrow. The liquid drops 1a₁ and 1a₂ contact the liquid drop 1b in the parallel region 32, at an increased contact area. Hence, the layers of two liquids form a sandwich-like liquid drop 1c, which is transported in the flow path 31c in the direction of the arrow. That is, the two liquids have well mixed, forming the liquid drop 1c. In this modification, two liquids contact at an increased area, thus promoting the mixing of two liquids.

FIG. 23 is a schematic perspective view illustrating an embodiment in which liquids are mixed by the method of FIG. 22 in a closed or opened two-dimensional (planer) flow path, as in the liquid transporting means shown in FIG. 16 and FIG. 18. In this embodiment, a drop 1b of one liquid is dripped onto the planer flow path 33, at a point in the flow path, two drops 1a₁ and 1a₂ of the same liquid are dripped onto the planer flow path 33, at two points on the sides of the first-mentioned point. The three liquid drops 1a₁, 1b and 1a₂ are moved to one point in the planer flow path 33 and made to contact. The liquid drops are thereby mixed into one liquid drop 1c, which is transported in another direction.

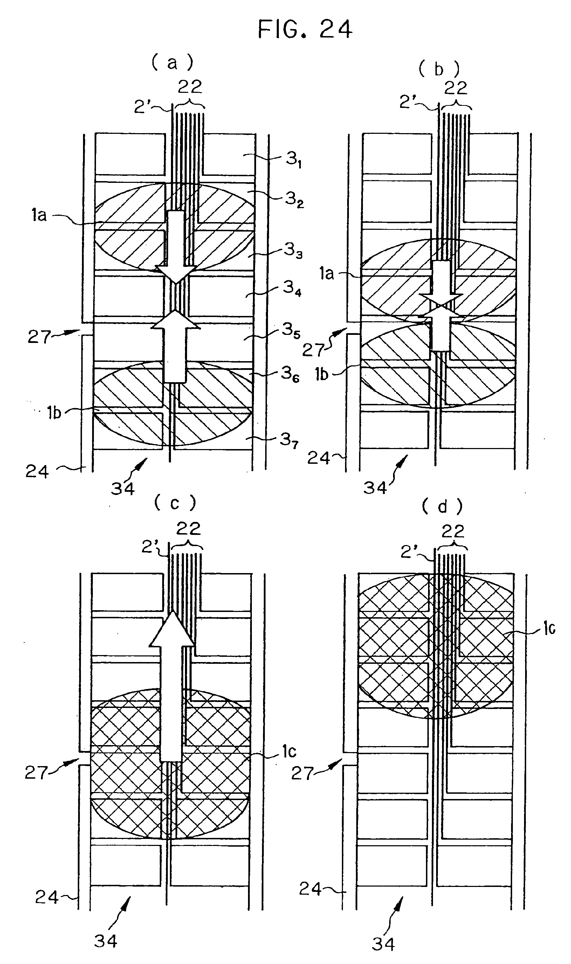

FIG. 24 is schematic diagrams that shows a configuration and operation for mixing two liquid drops 1a and 1b into one by using such a hollow cylindrical flow path 34 as is illustrated in FIG. 14. Air cannot flow into and from the cylindrical flow path 34, except at the ends thereof. Therefore, an air hole 27 is made in the middle part of a pipe 24 that constitutes the flow path 34. As shown in FIG. 24(a), the voltages applied to the divided electrodes 3₁ to 3₇ are sequentially controlled, transporting liquid drops 1a and 1b in the opposite directions, or toward each other, from the ends of the flow path 34. As shown in FIG. 24(b), the liquid drops 1a and 1b are made to contact (collide with) each other at the position of the air hole 27. At this time, the excessive air between the liquid drops 1a and 1b is automatically discharged. The liquid drops 1a and 1b, thus contacting each other, are combined with each other, and forming one liquid drop 1c, as is illustrated in FIG. 24 (c). The liquid drop 1c is transported in a predetermined direction as shown in FIG. 24 (d) .

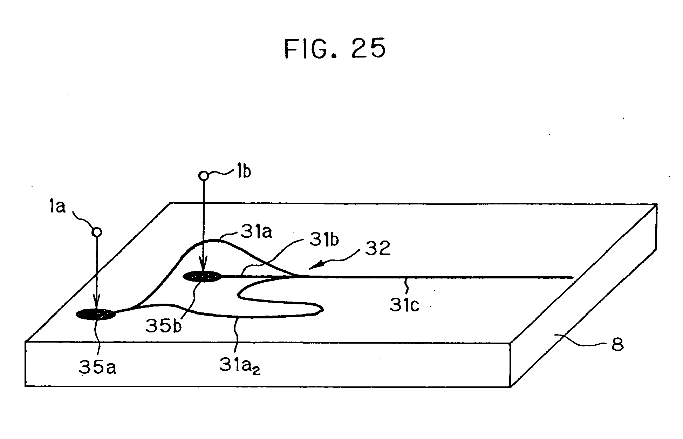

FIG. 25 is a diagram showing a flow path in which two drops 1a₁ and 1a₂ of one liquid contact a drop 1b of different liquid, at the opposite sides thereof, as in the case that is illustrated in FIG. 22. The substrate 8 has a liquid well (liquid-supplying part) 35b and a liquid well (liquid-supplying part) 35b in the upper surface. The liquid well 35a holds one liquid dripped from outside. The liquid well 35b hold different liquid dripped from outside. A flow path 31b extends from the liquid well 35b to a confluence region 32. Two flow paths 31a₁ and 31a₂ having almost the same length extend from the liquid well 35a to the confluence region 32, on two sides of the liquid well 35b and the flow path 31b, respectively. A flow path 31c extends from the confluence region 32, away from the flow paths 31a₁ and 31a₂ and 31b, to transport the liquid drop 1c formed by mixing the two liquids in the confluence region 32.

The liquid well 35a holding the liquid that will form drops 1a₁ and 1a₂ liquid and the flow paths 31a₁ and 31a₂ for this liquid are arranged, on the sides of the liquid well 35b holding the liquid that will form the drop 1b and the flow path 31b for this liquid. This is because the liquid drops are transported in the same plane, not in different planes. Since the two flow paths 31a₁ and 31a₂ that extend from the liquid well 35a to the confluence region 32 have almost the same length, the liquid drops 1a₁ and 1a₂ reach the confluence region 32 at the same time if they are transported from the liquid well 35a at the same speed. This makes it easier for these liquid drops to contact the liquid drop 1b in synchronism.

How liquids are stirred together will be explained. Stirring needs to be performed if two or more liquids are mixed as described above. Nonetheless, stirring is carried out, not necessarily after the mixing of liquids.

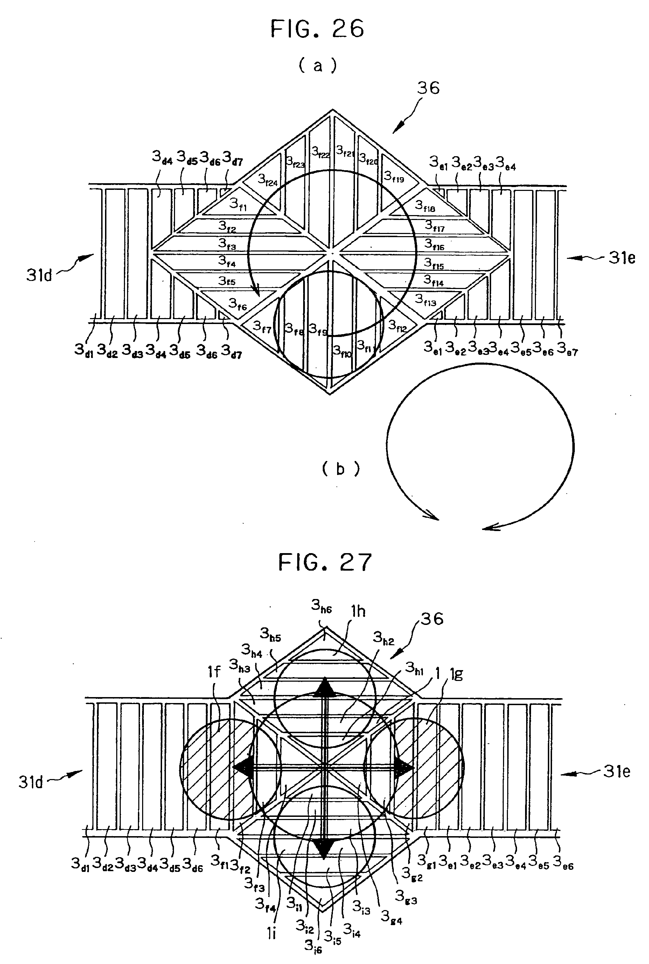

FIG. 26(a) depicts a pattern in which divided electrodes are arranged, in which a stirring region 36 is provided between flow paths 31d and 31e. The flow path 31d comprises a group of rectangular divided electrodes 3_{d1} to 3_{d7}, and the flow path 31e comprises a group of rectangular divided electrodes 3ₑ₁ to 3ₑ₇ . In the stirring region 36 provided between the flow paths 31d and 31e, four groups of divided electrodes are arranged in four sectors, respectively, in order to rotate a liquid drop 1 in this region 36 in the direction of the arrow. The fourth groups consist of, respectively, parallel divided electrodes 3_{f1} to 3_{f6}, parallel divided electrodes 3_{f7} to 3_{f12}, parallel divided electrodes 3_{f13} to 3_{f18}, and parallel divided electrodes 3_{f19} to 3_{f24}. The divided electrodes of each group extend at right angles to those of either adjacent group. Since the divided electrodes 3_{f1} to 3_{f24} are so arranged, the liquid drop 1 is rotated in the direction of the arrow shown in FIG. 26(a) as the voltages applied to the divided electrodes 3_{f1} to 3_{f24} are sequentially controlled. Therefore, the liquid drop 1 can be deformed, either elongated or shrunk, and thus be stirred. This promotes the mixing of, for example, two liquids. As FIG. 26(b) shows, the direction in which the liquid drop 1 is rotated may be repeatedly switched, thus rotating the drop 1 forwards and backwards. This also promotes the mixing of liquids. The stirring region 36 may be modified such that many divided electrodes are arranged, each shaped like a sector and extending in radial direction from the center of the stirring region 36. In this modification, too, the liquid drop 1 can be rotated in the stirring region 36.

FIG. 27 shows a divided-electrode pattern of another embodiment that has a stirring region 36 that is provided between flow paths 31d and 31e. The flow path 31d comprises a group of rectangular divided electrodes 3_{d1} to 3_{d6}, spaced apart in the direction of the path 31d. The flow path 31e comprises a group of rectangular divided electrodes 3ₑ₁ to 3ₑ₆, spaced apart in the direction of the path 31e. In the stirring region 36 provided between the flow paths 31d and 31e, four groups of divided electrodes, spaced apart in a circumferential direction, are arranged in four sectors, respectively, in order to elongate a liquid drop in the region 36 in the four directions indicated by the arrows. The fourth groups consist of, respectively, parallel divided electrodes 3_{f1} to 3_{f4}, parallel divided electrodes 3_{g1} to 3_{g4}, parallel divided electrodes 3ₕ₁ to 3ₕ₆, and parallel divided electrodes 3ᵢ₁ to 3ᵢ₆. The divided electrodes of each group extend at right angles to those of either adjacent group. (The divided electrodes of each group differ by 90° in orientation from those of its counterpart shown in FIG. 26(a).) Since the divided electrodes are so arranged, the liquid drop 1 is first elongated until it is divided into two liquid drops 1f and 1g by applying a voltage to the divided electrodes 3_{f1} to 3_{f4} and the divided electrodes 3_{g1} to 3_{g4}. (The liquid drop need not be divided into two drops. Rather, it may be elongated only.) Then, the application of voltage is stopped or the liquid drops 1f and 1g are pushed to each other, thus combining the drops 1f and 1g back into one drop 1. Next, a voltage is applied to the divided electrodes 3ₕ₁ to 3ₕ₆ and to the divided electrodes 3i₁ to 3i₆, dividing the liquid drop 1 into two drops 1h and 1i, in the direction perpendicular to the direction in which the drop 1 has been divided first. (In this case, too, the drop 1 need not be divided into two drops. It may be elongated only to be shaped like a rugby ball.) Thus, the liquid drop 1 is repeatedly elongated, shrunk or divided, and is thereby stirred.

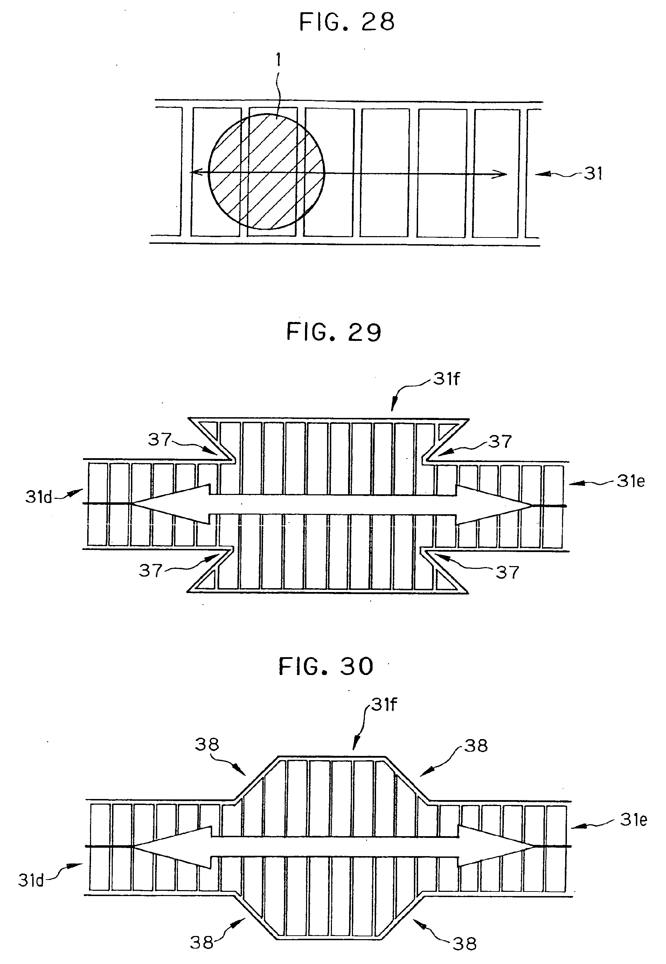

FIG. 28 is a diagram depicting an embodiment in which a liquid drop 1 is moved back and forth in one flow path 31 and is thereby rolled in the flow path. This is a simple method of promoting the stirring of the liquid. In FIG. 28, the reference numeral designating the divided electrodes are not shown.

FIG. 29 shows another embodiment that has a flow path 31f and flow-preventing projections 37. The flow path 31f is provided between the flow paths 31d and 31e and is broader than these paths 31d and 31e. The flow-preventing projections 37 are provided at the junction of the broad flow path 31f and flow path 31d and at the junction of the broad flow path 31f and the flow path 31e. The flow-preventing projections 37 do not block the liquid flowing from the narrow flow path 31d or 31e to the broad flow path 31f. As the liquid flows from the broad path 31f to the narrow flow path 31d or 31e, the flow-preventing projections 37 blocks it, generating a turbulence. Thus, the flow-preventing projections 37 cause the liquid to flow back and forth repeatedly between the flow path 31d and 31e, generating a turbulence and therefore promoting the stirring.

FIG. 30 shows another embodiment that has a flow path 31f and inclined parts 38. The flow path 31f is provided between the flow paths 31d and 31e and is broader than these paths 31d and 31e. The inclined parts 38 are provided at the junction of the broad flow path 31f and the flow path 31d and at the junction of the broad flow path 31f and the flow path 31e. In this embodiment, the inclined parts 38 do not block the liquid drop 1. Rather, they smoothly guide the liquid drop 1 repeatedly, back and forth between the flow paths 31d and 31e in the directions of the arrows. The liquid drop 1 is therefore elongated and shrunk. The liquid is thereby stirred.

In the embodiments of FIG. 29 and FIG. 30, the flow paths 31d, 31e and 31f may be opened type or closed type. The liquid drop may be transported in a planer flow path, not in a flow path that is a groove. In this case, both embodiments can operate as explained above if the region outside the electrode pattern is water-repellant, even if they comprise only the flow paths 31d, 31e and 31f that have the above-mentioned relation in terms of width.

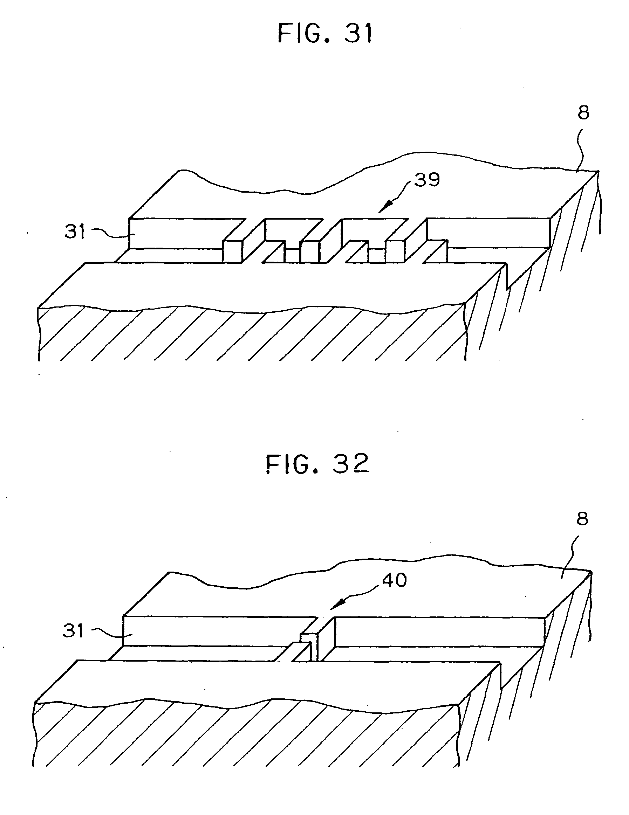

FIG. 31 is a perspective view showing an embodiment in which the substrate 8 has a groove, or a flow path 31, in the middle part of which projections 39 are arranged, forming a zigzag path. In the zigzag path, a liquid drop 1 is elongated and shrunk, thus deforming the liquid drop 1 and ultimately promoting the stirring of liquid.

FIG. 32 is a perspective view showing an embodiment in which the substrate 8 has a groove, or a flow path 31, in the middle part of which a gate part 40 is arranged, thus narrowing the flow path 31. Thus, the liquid drop 1 is compressed (shrunk) and expanded (elongated) as it passes through the gate part 40. This promotes the stirring of the liquid.

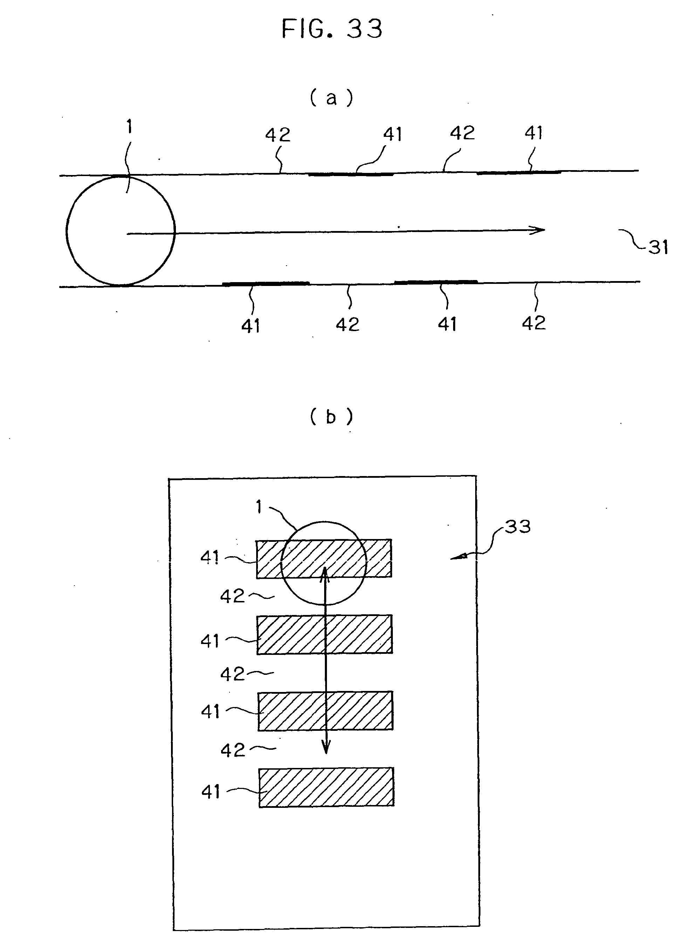

FIG. 33 (a) and FIG. 33 (b) are schematic diagrams, each showing an embodiment in which hydrophilic regions 41 and water-repellant (hydrophobic) regions 42 are alternately arranged in the direction a liquid drop 1 moves in a closed linear flow path 31 or an opened planer flow path 33. The liquid drop 1 is moved or moved back and forth in the direction and is elongated or shrunk, thus deforming the liquid drop 1, thereby to promote the stirring of liquid. In either embodiment, it suffices to provide at least one hydrophilic region 41 and at least one hydrophobic region 42. In the closed linearly flow path 31 shown in FIG. 33 (a) (see FIG. 6, FIG. 7, FIGS. 14 to 16), it is desirable to arrange hydrophilic regions 41 and hydrophobic regions 42 alternately, not only on one side of the liquid drop 1 but also on the other side thereof.

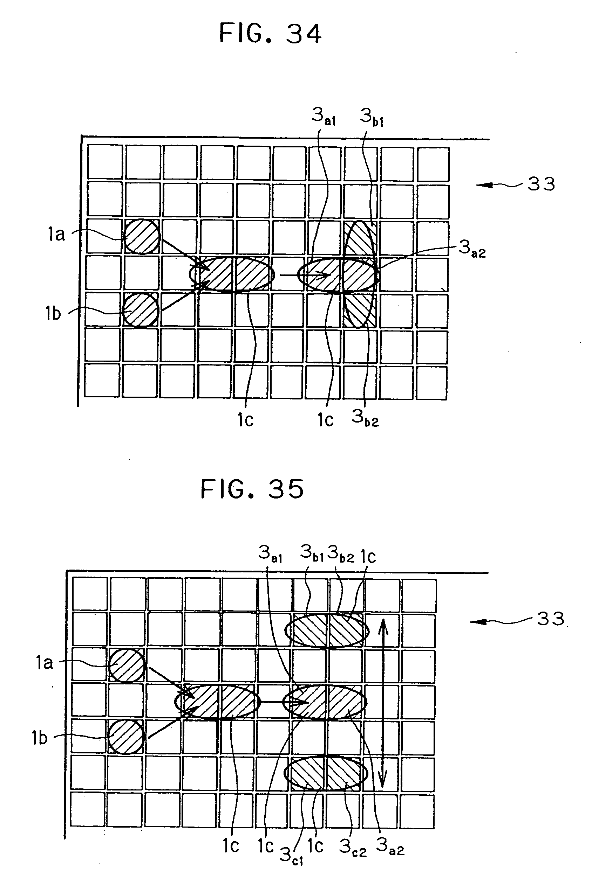

FIG. 34 is a schematic plan view showing an embodiment in which the liquid is stirred in the system of FIG. 27, in a closed two-dimensional planer path (FIG. 16) or an opened two-dimensional planer flow path (FIG. 18). Two liquid drops 1a and 1b dripped at two different points in the planer flow path 33 are moved toward another point in the planer flow path 33, until they contacts each other and form one liquid drop 1c. The liquid drop 1c, formed by mixing the two liquids, is transported in a different direction to a position, where divided electrodes 3ₐ₁ and 3ₐ₂ and divided electrodes 3_{b1} and 3_{b2} are provided. As the electrodes 3ₐ₁ and 3ₐ₂ and the electrodes 3_{b1} and 3_{b2} are alternately applied with a voltage, the liquid drop 1c is repeatedly elongated and shrunk, upward and downward, and leftward and rightward. The liquid is thereby stirred.

FIG. 35 is a schematic plan view showing an embodiment in which the liquid is stirred in the system of FIG. 28, in a closed or opened two-dimensional planer flow path. Two liquid drops 1a and 1b dripped at two different points in the planer flow path 33 are moved toward another point in the planer flow path 33, until they contacts each other and form one liquid drop 1c. The liquid drop 1c, formed by mixing the two liquids, is transported in a different direction to a position, where divided electrodes 3ₐ₁ and 3ₐ₂ are provided. Divided electrodes 3_{b1} and 3_{b2} are provided above the electrodes 3ₐ₁ and 3ₐ₂, and divided electrodes 3_{c1} and 3_{c2} are provided below the electrodes 3ₐ₁ and 3ₐ₂. As the electrodes 3ₐ₁ and 3ₐ₂, the electrodes 3_{b1} and 3_{b2} and electrodes 3_{c1} and 3_{c2} are alternately applied with a voltage, the liquid drop 1c is repeatedly moved up and down, rolling in the flow path 33. The liquid is thereby stirred.

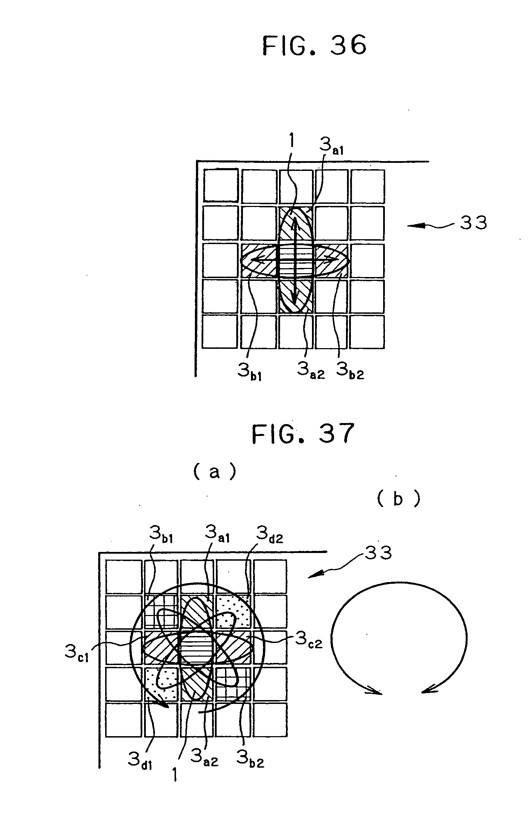

FIG. 36 is a schematic plan view showing another embodiment in which the liquid is stirred in the system of FIG. 27, in a closed or opened two-dimensional planer flow path. Divided electrodes 3ₐ₁ and 3ₐ₂ and the divided electrodes 3_{b1} and 3_{b2} are alternately applied with a voltage. The liquid drop 1c is thereby repeatedly elongated and shrunk, upward and downward and leftward and rightward, or repeatedly divided and mixed. The liquid is therefore stirred.

FIG. 37 (a) is a schematic plan view illustrating still another embodiment in which the liquid is stirred in the system of FIG. 26, in a closed or opened two-dimensional planer flowpath. A voltage is first applied to the divided electrodes 3ₐ₁ and 3ₐ₂, then to the divided electrodes 3_{b1} and 3_{b2}, next to the divided electrodes 3_{c1} and 3_{c2}, hence to the divided electrodes 3_{d1} and 3_{d2}, thereby rotating the liquid drop 1 in the direction of the arrow and stirring the liquid. Further, the direction in which the liquid drop is rotated is repeatedly switched as indicated by the arrow shown in FIG. 37(b). This promotes the mixing and stirring of the liquid.

Various embodiments in which the liquid is mixed and stirred have been described. To promote the mixing and stirring of liquids that have high viscosity, it is desired that such nonlinear elongation and folding as shown in, for example, FIG. 27, FIG. 29 and FIGS. 31 to 33 and FIG. 36, which can achieve chaos mixing, should be carried out.

Embodiments that perform the processes of measuring the amount of liquid (metering) and sampling the liquid in portions (divisional sampling), while transporting the fluid in the flow path. Note that the liquid transported in the flow path is liquid 50, not a liquid drop 1.

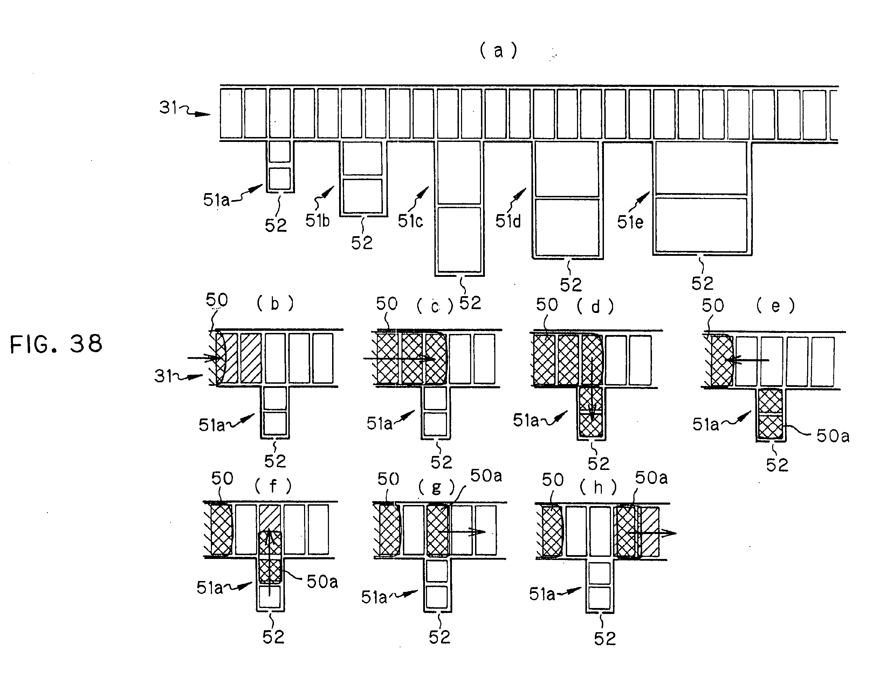

FIG. 38(a) is a plan view schematically illustrating an embodiment and the operation thereof, in which liquid inlet paths 51a to 51e are provided on the linear flow path 31. These paths 51a to 51e are equivalent to fixed-volume cups or fixed-volume measuring cups. Each flow path has a bottom, in which an air hole 52 is made to allow passage of air into and from the flow path (only if the flow path 31 is of the closed type) . The liquid inlet paths 51a to 51e can hold 1 unit of liquid, 3 units of liquid, 5 units of liquid, 7 units of liquid and 9 units of liquid, respectively. Nonetheless, the distribution of these different amounts of liquid can be changed in any manner desired. The divided electrodes provided in the flow path 31 and liquid inlet paths 51a to 51e are rectangular. No reference numerals denoting the divided electrodes are shown in FIG. 38(a).

In this configuration, as shown in FIG. 38(b) , liquid 50 is transported from the left end of the flow path 31 in the direction of the arrow. (In FIG. 38(b), any divided electrode applied with a voltage is shaded, indicating that the electrode contributes to the transportation of the liquid 50.) As FIG. 38(c) shows, the liquid 50 is transported to, for example, the entrance of the liquid inlet path 51a for measuring one unit of liquid. In this state, a voltage is applied to the divided electrodes provided in the liquid inlet path 51a, thereby guiding the liquid 50 into the liquid inlet path 51a, as is illustrated in FIG. FIG. 38(d) . Thereafter, as FIG. 38(e) shows, the voltage applied to the divided electrodes provided outside the liquid inlet path 51a is controlled, moving the liquid 50 back to the initial position, except that part 50a introduced into the liquid inlet path 51a. Thus, the liquid is sampled in a predetermined amount 50a. Next, the voltage applied to the divided electrode provided in the liquid inlet path 51a and the divided electrode provided at the entrance of the liquid inlet path 51a is controlled as shown in FIG. 38(f) . The liquid 50a is therefore drawn from the liquid inlet path 51a as is illustrated in FIG. 38(g) . Then, the liquid 50a, thus sampled, is transported toward the end of the flow path 31, which is opposite to the end where the liquid 50 has been moved back.

In the other liquid inlet paths 51b to 51e, too, the liquid is sampled in predetermined amounts and measured.

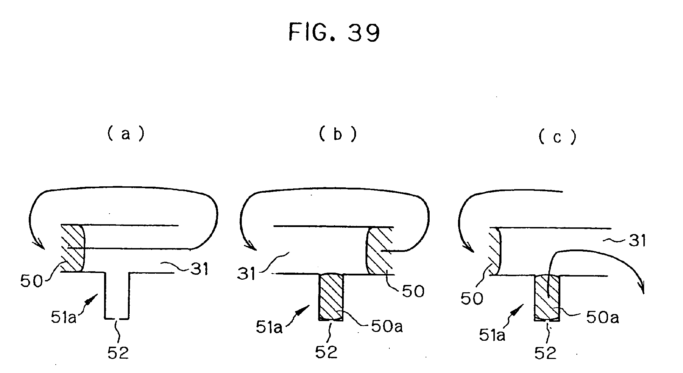

FIG. 39 is schematic diagrams explaining how liquid 50a is sampled in a prescribed amount from the liquid 50 every time a predetermined time elapses, by utilizing such divisional sampling as is illustrated in FIG. 38. The linear main flow path 31 is a circular path as indicated by the arrow shown in FIG. 39(a). A liquid inlet path 51a having a dead end is provided on the main flow path 31. As FIG. 39(b) shows, the liquid 50 circulates, except the part 50a of the prescribed amount that remains in the liquid inlet path 51a. Then, as shown in FIG. 39(c), the liquid 50a is sampled from the main flow path 31, to determine whether changes have occurred in the liquid 50.

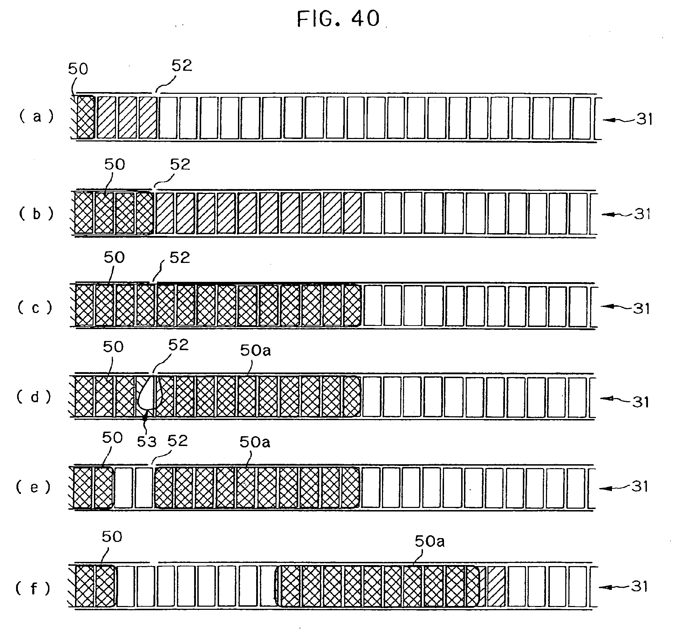

FIG. 40 is plan views schematically showing the process of sampling apart 50a from liquid 50, in a prescribed amount, by using one linear flow path 31 only. The flow path 31 has, in its middle part, an air hole 52 that allows passage of air (only if the flow path is of the closed type) . The divided electrodes provided in the flow path 31 are rectangular. No reference numerals denoting them are shown in the figure, but those of the divided electrodes, which are applied with a voltage and contribute to the moving of liquid 50 and liquid 50a are shaded in the figure. First, as shown in FIG. 40(a), a voltage is applied to the divided electrodes located at the left end of the flow path 31 and on the left of the air hole 52, thereby introducing the liquid 50 into the flow path 31 at the left end thereof. Then, as FIG. 40(b) shows, a voltage is applied to some divided electrodes located on the right of the air hole 52. The number (length) of divided electrodes on the right of the air hole 52, to which the voltage is applied, determines the amount of liquid 50a which will be sampled. Hence, the number (length) of divided electrodes, which lie on the right of the air hole 52 and which are applied with the voltage, is determined from the amount in which the liquid 50a should be sampled. Thereafter, the liquid 50 is moved (introduced) to the rightmost of the divided electrodes applied with the voltage, as is illustrated in FIG. 40(c). At this time, the application of voltage to one or more divided electrodes located at the air hole 52 is stopped. As a result, the liquid 50a is separated from the liquid 50 as shown in FIG. 40(d), at the leftmost of these divided electrodes. The air 53 introduced into the flow path through the air hole 52 promotes the separation of the liquid 50a. Then, the liquid 50 introduced from the left end of the flow path 31 is moved back as shown in FIG. 40(e). In this state, the liquid 50a of the prescribed amount is moved toward the right end of the flow path 31 and thus sampled, as is illustrated in FIG. 40(f) .

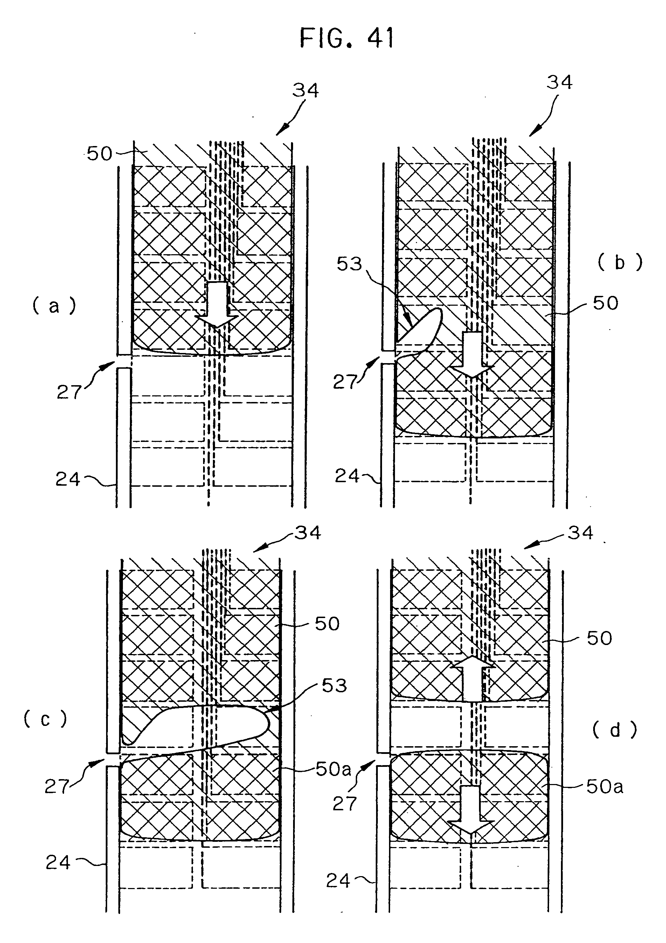

FIG. 41 is plan views schematically showing the process of sampling the liquid 50a from the liquid 40, in a prescribed amount, as in the embodiment of FIG. 40, by using a hollow cylindrical linear flow path 34 of the type shown in FIG. 14. In this case, the flow path 34 has an air hole 27 that allows passage of air into and from the flow path 34. As in FIG. 40, the divided electrodes are rectangular. No reference numerals denoting them are shown in the figure, but those of the divided electrodes, which are applied with a voltage and contribute to the moving of liquid 50 and liquid 50a are shaded in the figure. First, as FIG. 41(a) shows, a voltage is applied to the divided electrodes located above the air hole 27, introducing the liquid 50 downwards to the position of the air hole 27. Then, as shown in FIG. 41 (b), a voltage is applied to some divided electrodes located below the air hole 27. As a result, the liquid 50 is moved (introduced) in an amount determined from the number (length) of divided electrodes located below the air hole 27. At this time, the application of voltage to one or more divided electrodes located at the air hole 52 is stopped. Air 53 flows through the air hole 27 into the flow path 34. The liquid 50a is therefore separated from the liquid 50 lying above it, as is illustrated in FIG. 41(c). Thereafter, the liquid 50 introduced from the upper end of the flow path 34 is moved back as shown in FIG. 40(d). The liquid 50a of the prescribed amount is moved toward the lower end of the flow path 34 and thus sampled.

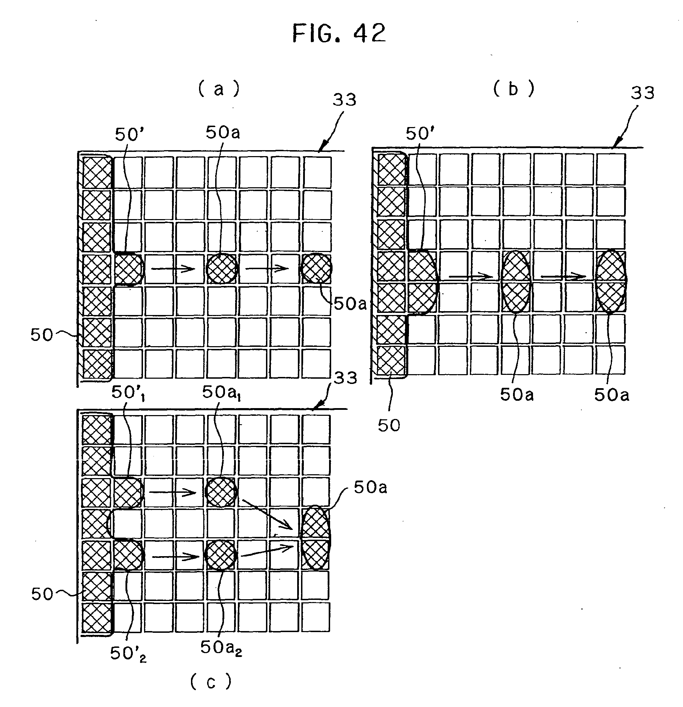

FIG. 42 is schematic plan views showing an embodiment in which liquid is sampled in a prescribed amount in a closed two-dimensional planer path (FIG. 16) or in an opened two-dimensional planer flow path (FIG. 18) . In this case, too, the divided electrodes are rectangular. No reference numerals denoting them are shown in the figure, but those of the divided electrodes, which are applied with a voltage and contribute to the moving of liquid 50 and liquid 50a are shaded in the figure. First, as shown in FIG. 42(a), the liquid 50 is introduced at one side of the planer flow path 33. In this case, a predetermined number of divided electrodes, or one divided electrode in this embodiment is selected, which protrudes from the set of divided electrodes applied with a voltage. The electrode selected attracts a protruding part 50' of the liquid 50. Then, a voltage is sequentially applied to the divided electrodes arranged in the same row as the electrode selected, as indicated by the arrow. The liquid of the protruding part 50' is thereby moved from the selected electrode. Hence, liquid 50a is sampled in a prescribed amount.

As FIG. 42 (b), which is similar to FIG. 42 (a), shows, two divided electrodes may be selected, which protrudes from the set of divided electrodes applied with a voltage. The electrodes selected attract a protruding part 50' of the liquid 50, which may be twice as much the liquid attracted in the embodiment of FIG. 42 (a) . Nevertheless, the liquid 50a that is sampled by controlling the voltage application as shown in FIG. 42 (b) is possibly greater than twice the amount of liquid sampled in the embodiment of FIG. 42(a) , due to the surface tension and the like of the liquid. In order to sample the liquid 50a, exactly twice as much as in the embodiment of FIG. 42(a) , the liquid 50 is introduced at one side of the planer flow path 33. Then, two divided electrodes spaced apart are selected, which protrudes from the set of divided electrodes applied with a voltage, as illustrated in FIG. 42(c). Two protruding portions 50₁' and 50₂' of liquid are thereby formed. A voltage is sequentially applied to the divided electrodes arranged in the same rows as the two electrode selected, as indicated by the arrow. The two protruding portions 50₁' and 50₂' are thereby separated from the liquid 50, providing two liquid drops 50a₁ and 50a₂. Thereafter, the liquid drops 50a₁ and 50a₂ are moved toward one point, where they are mixed. Hence, liquid 50a, exactly twice as much, can be sampled.

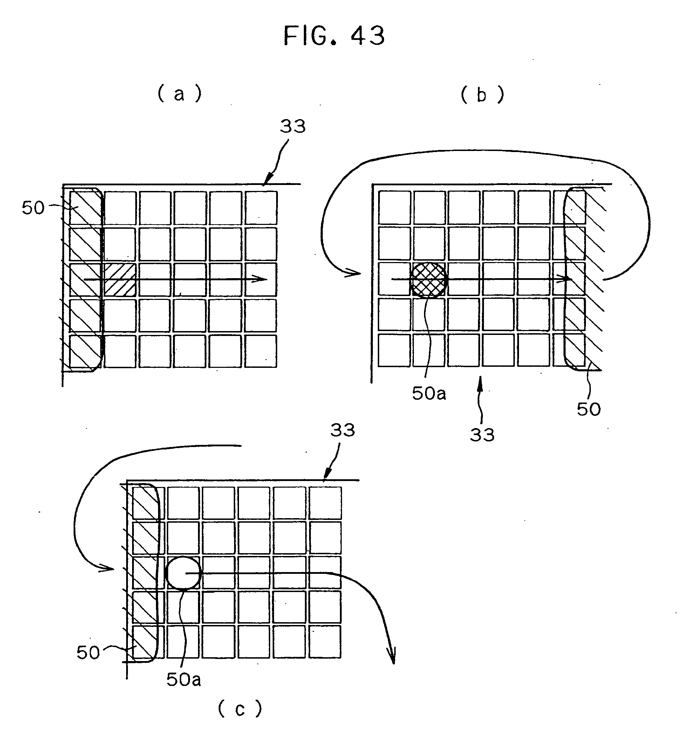

FIG. 43 is schematic diagrams illustrating an embodiment in which liquid 50a is sampled in a prescribed amount from liquid 50 at regular intervals as shown in FIG. 39, in a closed two-dimensional planer path (FIG. 16) or in an opened two-dimensional planer flow path (FIG. 18), in order to observe changes that occur with time. In this case, the liquid 50 is introduced at one side of the planer flow path 33 as is illustrated in FIG. 43(a), and a circle flow path is formed as indicated by the arrow in FIG. 43(b) . The voltage is continuously applied to some of the divided electrodes provided in the flow path 33, so that the liquid 50a remains in a predetermined amount after the liquid 50 passes through the flow path 33. After the liquid 50 passes through the liquid path 33, the liquid 50a separated and remaining on the divided electrodes to which the voltage is continuously applied is removed from the circular flow path as is illustrated in FIG. 43(c) and is used to determine changes or the like in the liquid every time a predetermined time elapses.

In any liquid transporting/processing device described above, the liquid remaining in the flow path mixes with the liquid transported (controlled) next, resulting contamination, unless a process for suppressing the contamination, such as washing, is performed in the flow path after the liquid is processed (controlled). That is, contamination may occur in the flow path, between the liquid drops as the liquid drops pass through the flow path. A configuration that achieves the washing of the flow path and thus prevent or suppress such contamination will be described below.

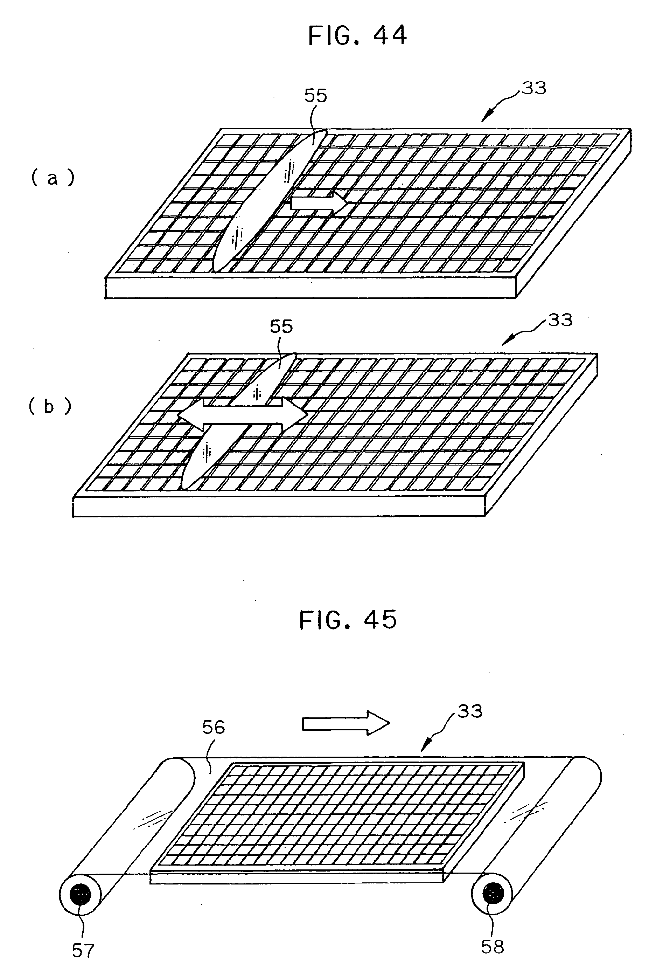

A flow path can be washed merely by transporting washing solution, such as water, through the flow path either in one direction or back and forth, no matter whether the flow path is linear or planer. FIG. 44 is diagrams schematically showing an embodiment in which the closed or opened two-dimensional flow path 33 is washed. Washing solution 55 is introduced into the flow path 33, in such an amount that the solution spreads over the entire width of the flow path 33. The washing solution 55 may then be moved in one direction as indicated by the arrow shown in FIG. 44(a). Alternatively, the washing solution 55 is moved back and forth as indicated by the arrows shown in FIG. 44 (b). In either case, the flow path 33 can be washed in its entirety.

FIG. 45 is a diagram schematically showing an embodiment in which a contaminated part, if any, of the flow path is replaced, not using washing solution. In this case, the two-dimensional path 33 of the opened type is kept clean. A thin film 56 of water-repellant insulating material is used in this embodiment. The film 56 is laid, covering the two-dimensional path 33 of the opened type, and a liquid drop 1 or liquid 50 is transported (controlled) on the film 56. After the liquid drop 1 or liquid 50 is transported, the film 56 is peeled off the flow path 33, before another liquid drop 1 or another part of solution 50 is transported. Then, the film 56 is taken up from a feed roller 57 to a take-up roller 58, for a distance that is longer than the length of the flow path 33. Thus, the contaminated part of the film 56 is removed and replaced by a new part, which is used to transport another liquid drop or another part of solution 50.

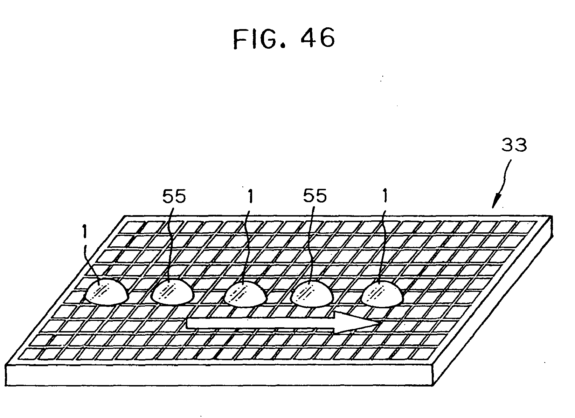

FIG. 46 shows an embodiment in which the flow path is sequentially washed by interposing drops of the washing solution between liquid drops that are being sequentially transported, thus preventing contamination of the liquid drops. This configuration can be applied to both a liquid-transporting means having a linear flow path and a liquid-transporting means having a planer flow path. Nonetheless, FIG. 46 schematically depicts an example that has a closed or opened two-dimensional planer flow path 33. In the flow path 33, a plurality of liquid drops 1 are sequentially transported in the direction of the arrow, spaced apart from one another. One or more liquid drops 55 of washing solution are interposed between any two adjacent liquid drops 1 and simultaneously transported together with the liquid drops 1 in the same direction of the arrow. Thus, the flow path 33 contaminated with a liquid drop 1 is washed, and the next liquid drop 1 is transported.

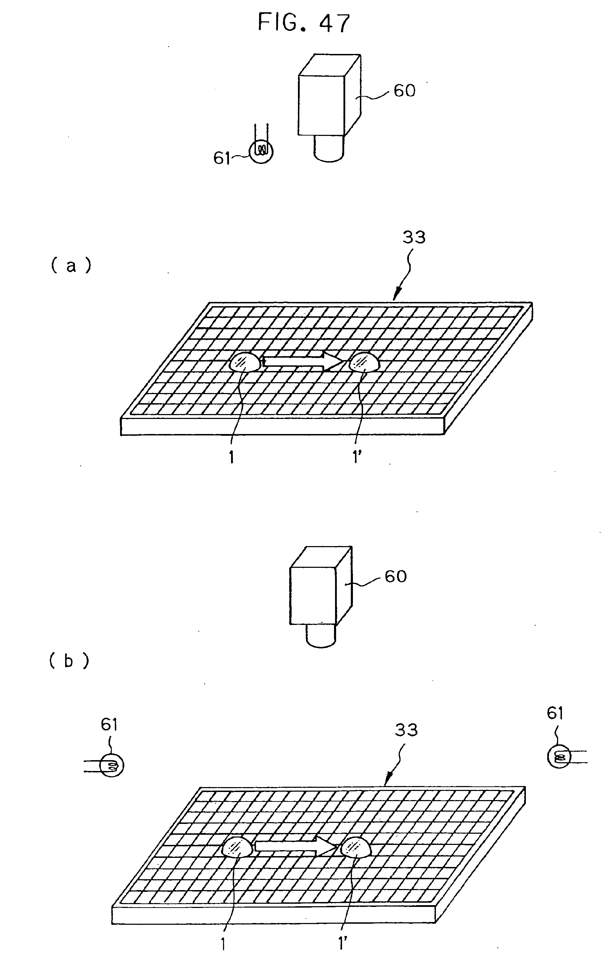

In any liquid transporting/processing device described above, it is necessary to monitor the position and motion of the liquid drop 1. Whether the flow path is an opened type or a closed type, whether it is linear or planer, the flow path is illuminated by appropriate means if the position of the liquid drop 1 can be determined from outside. An image of the flow path can be thereby formed on the imaging element of a camera to monitor the position and motion of the liquid drop 1. FIG. 47 schematically illustrates an embodiment in which an illumination-light source 61 applies illumination light to the closed or opened two-dimensional planer flow path 33 and a camera 60 photographs the flow path and thereby monitoring the motion of a liquid drop 1 moving from position 1 to position 1' . In the case shown in FIG. 47(a), the illumination-light source 61 is located substantially right above the planer flow path 33 and the camera 60 with an imaging element is arranged beside the illumination-light source 61. The illumination-light source 61 applies illumination light to the flow path 33 substantially from right above (thus achieving incident illumination), and the camera 60 photographs the flow path 33. Then, the liquid drop 1 scatters the light, appearing very bright. The liquid drop 1 can therefore be monitored in terms of position and motion. In the case shown in FIG. 47(b) , illumination-light sources 61 are located above the ends of the planer flow path 33 and the camera 60 with an imaging element is arranged beside the illumination-light source 61. (That is, two illumination-light sources 61 are located above the ends of the planer flow path 33, respectively.) The illumination-light sources 61 apply illumination light to the flow path 33, obliquely from above (thus achieving dark-field illumination), thereby photographing the flow path 33. Then, the liquid drop 1 scatters the light, appearing very bright. The liquid drop 1 can therefore be monitored in terms of position and motion.

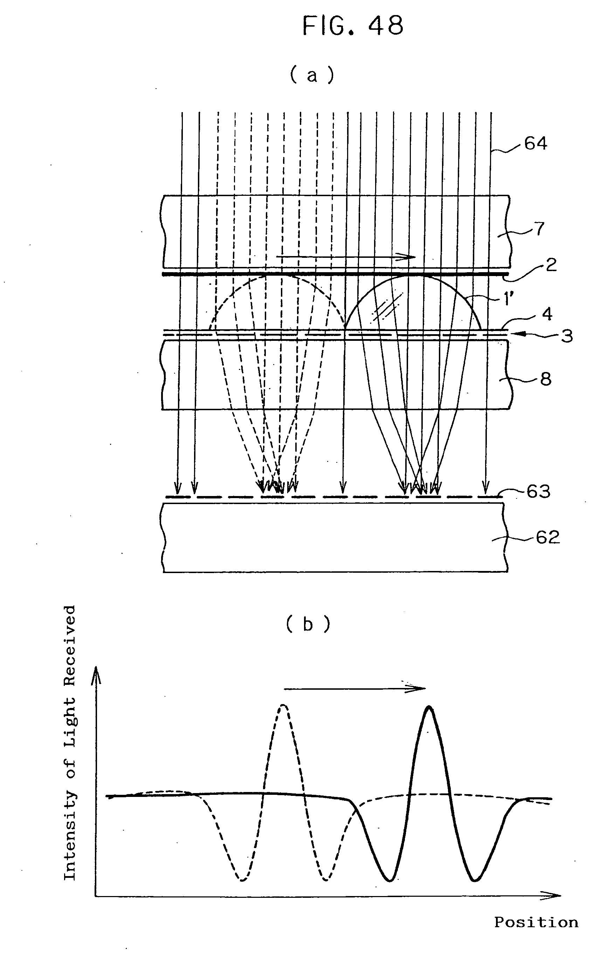

In the embodiment of FIG. 47, the position of the liquid drop 1 is monitored, as it were, by means of reflex illumination. However, the position of the liquid drop 1 can be monitored by means of transmitted illumination, too, no matter whether the flow path is an opened type or a closed type and whether it is linear or planer. FIG. 48 is diagrams showing an embodiment in which a liquid drop 1 being transported by the liquid transporting means shown in FIG. 1 is monitored in terms of position. More precisely, FIG. 48 shows a mechanism of monitoring the position of the liquid drop 1 in a liquid transporting means that can transport liquid drops in a one-dimensional direction. As shown in FIG. 48(a) that is a sectional view, the light-receiving elements 63 of, for example, a CCD are provided on a substrate 62. These elements 63 are arranged, forming an array, which lies outside the substrate 8 and near the plane at which the liquid drop 1 shaped like a convex lens converges light.

In this configuration, parallel light beams 64, for example, may be applied through the substrate 8 on which the common electrode 2 of the liquid-transporting means shown in FIG. 1 is provided. Then, the liquid drop 1 converges some of the light beams at some of the light-receiving elements 63. When the liquid drop 1 lies at the position 1 indicated by the broken line in FIG. 48(a) , the light-receiving elements 63 generate a signal indicated by the broken line in FIG. 48(b), which represents the relation between the intensity of light received and the position of the liquid drop 1. When the liquid drop 1 lies at the position 1' indicated by the solid line in FIG. 48(a) , the light-receiving elements 63 generate a signal indicated by the solid line in FIG. 48(b), which represents the relation between the intensity of light received and the position of the liquid drop 1. The position of the liquid drop 1 is monitored from the peak of either signal. Hence, the liquid drop 1 can be accurately controlled in terms of position if the monitor signal is fed back to the control device 10 (FIG. 1). Alternatively, a display device may display the peak of either signal. In this case, the position of the tiny liquid drop 1 can be precisely determined from the peak of the monitor signal. If the light-receiving elements 63 are arranged, forming a two-dimensional array, the two-dimensional position of the liquid drop 1 can be monitored.

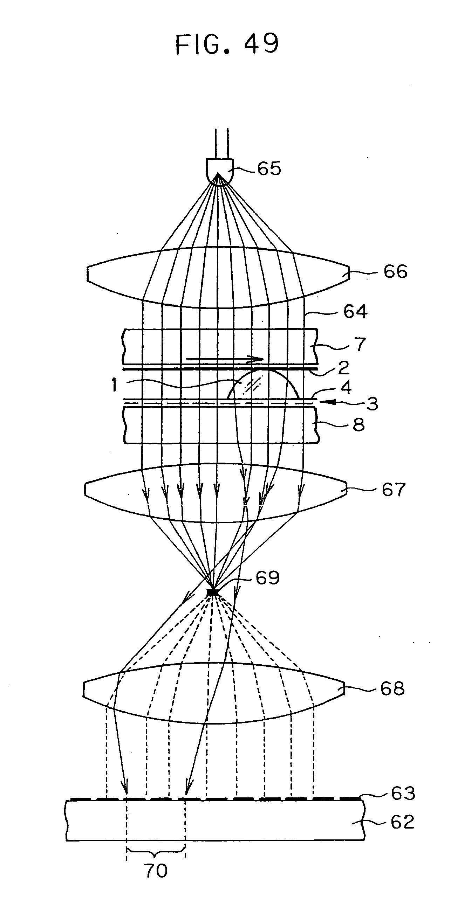

FIG. 49 is a sectional view depicting an embodiment in which the light-intensity signal corresponding to a liquid drop 1 has a peak not so high, thus representing a low intensity contrast. This embodiment therefore employs spatial frequency filtering to enhance the intensity contrast and detect the position of the liquid drop 1. In this case, two positive lenses 67 and 68 that are mutually confocal are arranged between the liquid transporting means of FIG. 1 and the light-receiving elements 63 provided on the substrate 62. The liquid transporting means of FIG. 1 is arranged in a front focal plane of the positive lens 67, and the light-receiving elements 63 are arranged in the back focal plane of the positive lens 68. A shield 69 is arranged at the common focal point of the positive lenses 67 and 68. The parallel light beams 64 that illuminate the liquid transporting means of FIG. 1 are obtained by using a collimate lens 66 that converts the light from a point source of light 65 to parallel beams, the point source of light 65 being arranged at the front focal point of the collimate lens 66.

In this arrangement, the collimate lens 66 converts the illumination light coming from the point source of light 65, into parallel light beams 64. When the substrate 7 on which the common electrode film 2 of the liquid transporting means of FIG. 1 is provided are illuminated at entire surface with the parallel light beams 64, those parallel beams applied at positions where no liquid drops 1 exist pass through the liquid transporting means. The positive lens 67 focuses the parallel light beams at the back focal point thereof. The light beams are blocked by the shield 69. At the spherical surface of the liquid drop 1, the parallel light beams 64 are refracted and pass through the liquid transporting means. These beams proceed to positions other than the back focal point and are applied to the other positive lens 68, not blocked by the shield 69. They form an image 70 of the edge of the liquid drop 1 at the back focal point of the positive lens 68. The light-receiving elements 63 detect the image 70, thus detecting the position of the liquid drop 1 at high accuracy.

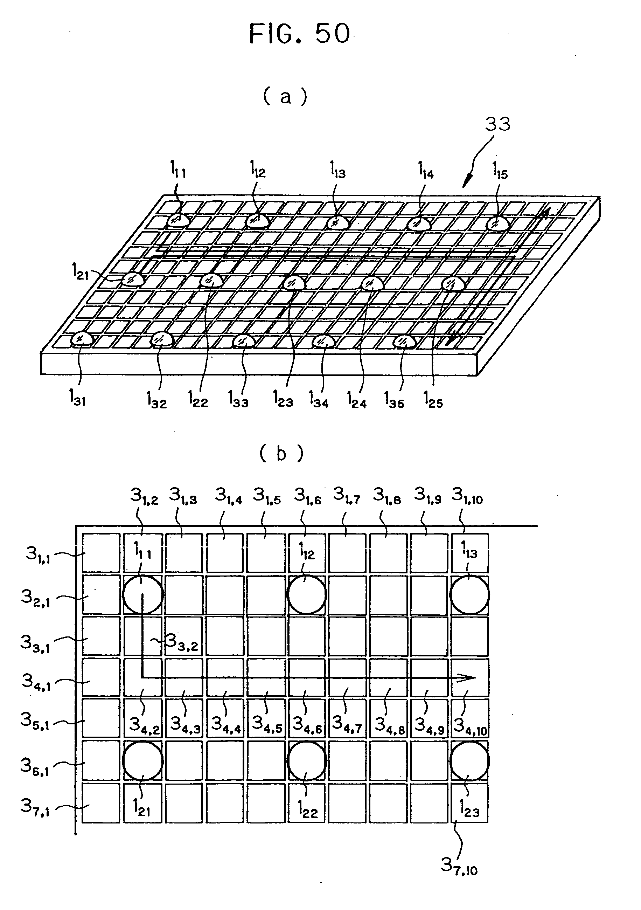

In some cases, a plurality of liquid drops may be arranged in the two-dimensional planer flow path 33 and one or more of these drops may be selectivity taken out from the path 33 or re-arranged on the path 33. This process of taking out or re-arranging some drops shall be called sorting. The sorting can be accomplished if the linear flow path 33 is formed of a mesh. Nonetheless, the two-dimensional planer flow path 33 is used in order to achieve sorting of higher freedom. FIG. 50 is a perspective view (a) and plan view (b), both showing an embodiment in which liquid drops are sorted at high freedom. In this embodiment, the two-dimensional flow path 33 is either an opened type or a closed type. In this planer flow path 33, divided electrodes 3₁,₁, 3_{1,2}, ... 3_{1,10}, ... 3_{2,1}, 3_{2,2}, ... 3_{2,10}, ... 3_{3,1}, 3_{3,2}, ... 3_{3,10}, ... 3_{7,1}, 3_{7,2}, ... 3_{7,10}, .... are arranged in m rows and n columns, arranged in the X direction and the Y direction, forming a two-dimensional matrix.

In this example, liquid drops 1₁₁, 1₁₂, 1₁₃, 1₁₄ and 1₁₅ are dripped onto the four divided electrodes of the second row, respectively. Liquid drops 1₂₁, 1₂₂, 1₂₃, 1₂₄ and 1₂₅ are dripped onto the four divided electrodes of the sixth row, respectively, and arranged besides the liquid drops 1₁₁, 1₁₂, 1₁₃, 1₁₄ and 1₁₅, respectively, in the column direction. Similarly, liquid drops 1₃₁, 1₃₂, 1₃₃, 1₃₄ and 1₃₅ are dripped onto the four divided electrodes of the tenth row, respectively. That is, the liquid drops 1₁₁, 1₁₂, 1₁₃, 1₁₄ and 1₁₅, liquid drops 1₂₁, 1₂₂, 1₂₃, 1₂₄ and 1₂₅ and liquid drops 1₃₁, 1₃₂, 1₃₃, 1₃₄ and 1₃₅ are arranged, side by side, aligned in both the X direction and the Y direction, not only between the rows but also between the columns.

In this state, the liquid drops 1₁₁, for example, which lies at the divided electrode 3₂,₂ and exists in the second row and second column, may be moved along a route indicated by the arrow, which extend between the liquid drops 1₁₁, 1₁₂, 1₁₃, 1₁₄ and 1₁₅,, on the one hand, and the liquid drops 1₂₁, 1₂₂, 1₂₃, 1₂₄ and 1₂₅, on the other hand, thereby to accomplish the sorting. To achieve this sorting, a voltage is applied to the divided electrodes 3_{3,2}, 3_{4,2}, 3_{4,3}, 3_{4,4}, 3_{4,5}, 3_{4,6}, 3_{4,7}, 3_{4,8}, 3_{4,9} and 3₄, 10, one after another, thus moving the liquid drop 1₁₁·

Assume that three or more divided electrodes are not provided between rows of liquid drops aligned or between columns of liquid drops aligned. Then, when a voltage is applied to the divided electrodes lying between the rows or columns, in order to move a specific liquid drop, not only this liquid drop, but also other liquid drops that need not be moved, will be moved. Desired sorting cannot be accomplished.

To selectivity take out or re-arrange some of the liquid drops arranged in the two-dimensional planer flow path 33, in two-dimensional directions and to move each liquid drop along a route extending between the other liquid drops arranged side by side, the liquid drops must be arranged so that at least three segments exist between the liquid drops that lie at the intersections (FIG. 15) if the two-dimensional planer flow path 33 is constituted by divided electrodes arranged in two directions or by an electrode assembly of simple-matrix driven type. (Each divided electrode or the intersection of each two divided electrodes is called segment).

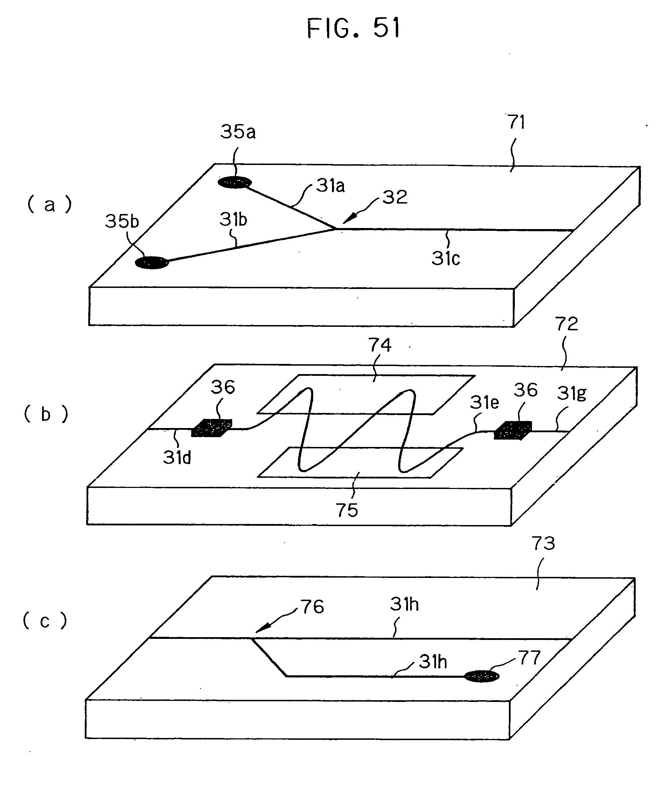

The sections that process (control) the liquid in various ways may constitute liquid-processing units. The liquid-processing units may be coupled to provide a system. FIG. 51 is schematic perspective views that illustrate such liquid-processing units. More precisely, FIG. 51(a) is a perspective view of a process unit 71 that mixes two liquids as described with reference to FIG. 20 and the like. Liquid may be made to flow in the reverse direction and may then be divided into two steams. The process unit 71 has two liquid wells 35a and 35b made in its surface. From the liquid wells 35a and 35b, two flow paths 31a and 31b extend to the confluence region 32. From the confluence region 32, one flow path 31c extends to one end of the next process unit 71, which lie remote from the liquid wells 35a and 35b.

FIG. 51(b) depicts a process unit 72 that has flowing paths 31d, 31e, and 31g, a stirring region 36, a cooling region 74, and a heating region 75. The stirring region 36 is provided between the flow paths 31d and 31e, or between the flow paths 31e and 31g. The middle flow path 31e is meandering, partly lying in the cooling region 74 or the heating region 75, or partly lying in both the cooling region 74 and the heating region 75. The flow paths 31d and 31g extend to the opposite ends of the unit 72, respectively.

FIG. 51(c) shows a process unit 73 that has a flow path 31h that extends from one end to the other end. The flow path 31h is branched at a branching region 76, forming a flow path 31. A liquid well or a liquid-sampling port 77 is provided at the end of the flow path 31. Part of liquid can therefore be sampled. Liquids may be made to flow in the reverse direction. In this case, the unit 73 can be used as a process unit that add liquid to another liquid.

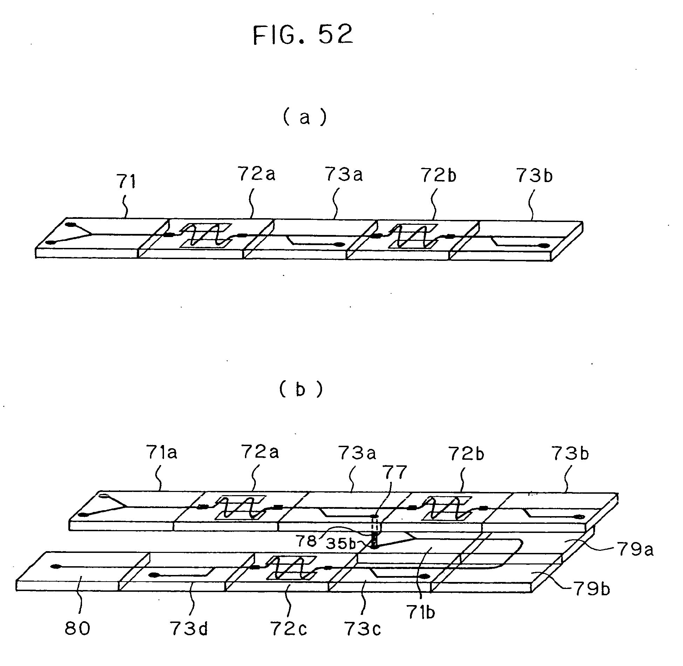

FIG. 52 is schematic perspective views showing an embodiment in which process units 71 to 73 described above are used in any combination, thereby to perform various processes (controls) on liquids. FIG. 52(a) shows an embodiment in which the process units 71 to 73 are combined, forming one row of units. FIG. 52(b) depicts an embodiment in which the process units 71 to 73 are combined, forming two rows of units, and two processes are performed in parallel. In the embodiment of FIG. 52(a), the process unit 71 has a single unit, the process unit 72 has two units 72a and 72b, and the process unit 73 has two units 73a and 73b. Five process units are connected in series: process unit 71 → process unit 72a → process unit 73a → process unit 72b → process unit 73b.

In the embodiment of FIG. 52(b), the process unit 71 has two units 71a and 71b, the process unit 72 has three unit 72a, 72b and 72c, and the process unit 73 has four units 73a, 73b, 73c and 73d. This embodiment has other units 79a, 79b and 80. The embodiment comprises two rows of units. The upper row is identical to the embodiment shown in FIG. 52(a). The liquid sampled at the liquid well or the liquid-sampling port 77 of the process unit 73a of FIG. 52(a) is supplied via a flow path 78 to the lower row. The lower row comprises seven units connected in series: process unit 71b → process unit 79a → process unit 79b → process unit 73c → process unit 72c → process unit 73d → process unit 80. The process units 79a and 79b are simple process units that have a curved flow path each, and the process unit 80 has a liquid well.

FIG. 52 is diagrams that illustrates that the process units 71 to 73 shown in FIGS. 51(a) to 51(c) may be coupled, forming one row or two rows, in order to perform various processes on liquids . No detailed description will be made of FIG. 52.

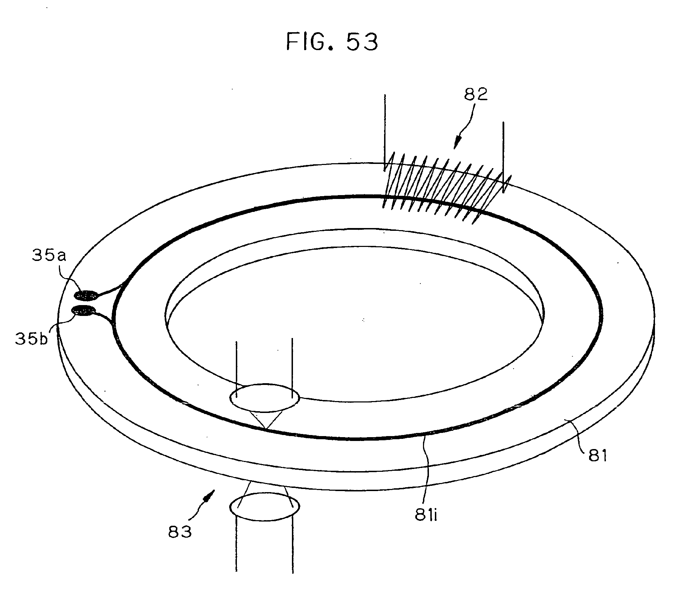

FIG. 53 is a schematic perspective view showing an embodiment having a circular flow path 81i that functions as process unit 81. This embodiment has liquid wells 35a. and 35, a heater device 82, and an optical measuring device 83. The liquid wells 35a and 35 are connected to the circular flow path 81i. The heating device 82, which has a heater, and the optical measuring device 83 are provided on the circular flow path 81i, to detect the changes that occur with time in a liquid drop 1 or liquid 50 circulating in the circular flow path 81i. The heating device 82 may be replaced by a process unit that mixes liquids or separates liquid. The optical measuring device 83 may be replaced by a measuring device that detects various characteristics of the liquid 50.

The process units 71 to 73 and process units 79a, 79b, 80 and 81 have one flow path each and perform one process each. Instead, each process unit may have a plurality of flow paths, each for the same process. In this case, each process unit can process more liquid per unit area.

The process units provided on the flow path are not limited to such units described above, i.e., mixing, stirring, branching, metering, sampling, washing, sorting, detecting, heating, cooling, circulating. Rather, process units may be used, which can perform various other processes (controls).

In the liquid transporting means shown in FIG. 1 to FIG. 4, an AC power source may be used as power source 5 for applying a drive voltage between the common electrode 2 and the divided electrode group 3 or between the divided electrode group 3 and the divided electrode group 3' . If this is the case, the liquid drop 1 or liquid 50 may be heated. In view of this, an AC power source may be positively used as power source 5 to drive the heating region and the mixing-stirring region, while a DC power source is used for the other regions provided in the flow path.

It is desired that the flow path of the liquid transporting/processing device should have a width of at least 20 µm, preferably at least 50 µm (i.e., the width for a linear path, and the width of each divided electrode for a planer path), particularly if the liquid drop 1 or liquid 50 contains living cells, like blood. If the flow path has a smaller width, it will be clogged, failing to move the liquid drop 1 or liquid 50 smoothly.

The liquid transporting/processing device according to this invention should better have a temperature sensor in the substrate, to monitor the temperature of the liquid drop 1 or liquid 50 being transported. It is desired that a temperature sensor be installed outside the liquid transporting/processing device, so that the temperature of the atmosphere in which the device is used is monitored. This is desirable, particularly in the case where liquid containing DNA or the like is heated and then cooled to the atmosphere temperature in a biotechnological process.

In some cases, it is desired that a temperature sensor, humidifier and a de-humidifier be installed in the atmosphere in which the liquid transporting/processing device according to this invention is used, particularly if the device is of the opened type. If the humidity in the atmosphere is too low, the liquid drop 1 or liquid 50 may evaporate. If the humidity is too high, dew will be formed, possibly changing the liquid drop 1 or liquid 50 in quality. To prevent the evaporation or dew forming, a temperature sensor, humidifier and a de-humidifier should better be installed in the atmosphere.

In any liquid transporting/processing device according to the present invention, the substrate 8 in which the flow paths 31 and 33 are provided may be a flexible one that can bend well. In this case, the liquid transporting device can be flexible as a whole.

The liquid that the liquid transporting/processing device according to this invention may process is solution containing DNA or the like and used in biotechnology, solution used in biochemical processes, blood, or the like, though not necessary limited to these.

Liquid transporting/processing devices and liquid transporting/processing methods according to the present invention can be configured as follows.
[1] A liquid transporting/processing method of washing a flow path that electrically controls transportation of liquid, the method characterized in that washing solution is transported in the flow path in one direction or back and forth, thereby to wash the flow path.
[2] A liquid transporting/processing method of washing a flow path that electrically controls transportation of liquid, the method characterized in that at least one drop of washing solution is interposed between any adjacent ones of a plurality of liquid drops being transported sequentially, spaced one from another, thereby to wash the flow path.
[3] The liquid transporting/processing method described in [1] or [2], characterized in that the flow path has a plurality of first electrodes arranged parallel to the liquid through an insulating layer, a second electrode that is to contact the liquid, and a control means for controlling, respectively, voltages applied to the first electrodes arranged parallel to the second electrode, and the control means comprises flow paths that are configured to control, respectively, the voltages applied to the first electrodes arranged parallel, thereby to move the liquid along the insulating layer.
[4] The liquid transporting/processing method described in [1] or [2], characterized in that the flow path has a plurality of first electrodes arranged parallel to the liquid through an insulating layer, a second electrode that is arranged to the liquid through an insulating layer, and a control means for controlling, respectively, voltages applied to the first electrodes arranged parallel with respect to the second electrode, and the control means comprises flow paths that are configured to control, respectively, the voltages applied to the first electrodes arranged parallel, thereby to move the liquid along the insulating layer.
[5] The liquid transporting/processing method described in [3] or [4], characterized in that the second electrode that constitutes the flow path is on a substrate on which the first electrodes are arranged, and is arranged between some of the first electrodes arranged parallel or in a gap made in at least one of the first electrodes.
[6] The liquid transporting/processing method described in any one of [3] to [5], characterized in that the first electrodes that constitute the flow path are arranged parallel, forming a two-dimensional array.
[7] The liquid transporting/processing method described in [4], characterized in that the second electrode that constitutes the flow path comprises a plurality of electrodes arranged parallel.
[8] The liquid transporting/processing method described in [7], characterized in that the first electrodes extend parallel, intersecting with the second electrodes that extend parallel.
[9] The liquid transporting/processing method described in [1] or [2], characterized in that the flow path comprises a plurality of electrodes arranged parallel to liquid through an insulating layer, the electrodes arranged parallel forming at least three electrode groups alternately and cyclically arranged in the direction of transporting the liquid, and has control means for controlling, respectively, phases of AC voltages applied to the at least three electrode groups, the control means comprising flow paths that are configured to control, respectively, the phases of the AC voltages applied to the at least three electrode groups, thereby to move the liquid along the insulating layer.
[10] The liquid transporting/processing method described in any one of [3] to [9], characterized in that a water-repellant layer is provided on the insulating layer that contacts the liquid.
[11] A liquid transporting/processing device characterized in that a film made of water-repellant insulating material is firmly bonded to a surface of a flow path that electrically controls transportation of liquid, the film being able to be replaced.
[12] The liquid transporting/processing device described in [11], characterized in that the flow path is a flow path of opened type.
[13] The liquid transporting/processing device described in [11] or [12], characterized in that the flow path has a plurality of first electrodes arranged parallel to the liquid through an insulating layer, a second electrode that is to contact the liquid or is arranged through an insulating layer, and a control means for controlling, respectively, voltages applied to the first electrodes arranged parallel to the second electrode, and the control means is configured to control, respectively, the voltages applied to the first electrodes arranged parallel, thereby to move the liquid along the insulating layer.
[14] The liquid transporting/processing device described in [13], characterized in that the second electrode that constitutes the flow path is on a substrate on which the first electrodes are arranged, and is arranged between some of the first electrodes arranged parallel or in a gap made in at least one of the first electrodes.
[15] The liquid transporting/processing device described in [11] or [12], characterized in that the flow path comprises a plurality of electrodes arranged parallel to liquid through an insulating layer, the electrodes arranged parallel forming at least three electrode groups alternately and cyclically arranged in the direction of transporting the liquid, and has a control means for controlling, respectively, phases of AC voltages applied to the at least three electrode groups, and the control means comprises flow paths that are configured to control, respectively, the phases of the AC voltages applied to the at least three electrode groups, thereby to move the liquid along the insulating layer.
[16] The liquid transporting/processing device described in any one of [13] to [15], characterized in that a water-repellant layer is provided on the insulating layer that contacts the liquid.

Liquid transporting/processing devices according to the present invention can be configured as follows.
[1] A liquid transporting/processing device characterized by having a plurality of first electrodes arranged parallel to a liquid drop through an insulating layer, a second electrode that contacts the liquid drop or is arranged through an insulating layer, and a control means for controlling, respectively, voltages applied to the first electrodes arranged parallel to the second electrode, the second electrode being on a substrate on which the first electrodes are arranged, and arranged between some of the first electrodes arranged parallel or in a gap made in at least one of the first electrodes, and the control means configured to control, respectively, the voltages applied to the first electrodes arranged parallel, thereby to move the liquid drop along the insulating layer.
[2] The liquid transporting/processing device described in [1], characterized in that a water-repellant layer is provided on at least one of the insulating layer provided on the first electrodes and the insulating layer provided on the second electrode.
[3] The liquid transporting/processing device described in [1] or [2], characterized in that the electrodes that constitute the first electrodes are arranged in a straight line or a curved line, forming a linear flow path.
[4] The liquid transporting/processing device described in [1] or [2], characterized in that the substrate is a hollow cylinder, and the electrodes that constitute the first electrodes and the second electrode are arranged in an inner surface of the hollow cylinder.
[5] The liquid transporting/processing device described in [1] or [2], characterized in that the electrodes that constitute the first electrodes are arranged parallel in the form of a two-dimensional array, forming a planer flow path.
[6] The liquid transporting/processing device described in any one of [1] to [5], characterized in that the voltage applied is a DC voltage.
[7] The liquid transporting/processing device described in any one of [1] to [5], characterized in that the voltage applied is an AC voltage.
[8] The liquid transporting/processing device described in any one of [1] to [5], characterized in that the voltage applied is either a DC voltage or an AC voltage in accordance with a position in the flow path.
[9] The liquid transporting/processing device described in any one of [1] to [8], characterized in that the electrodes that constitute the first electrode differ in shape, each in accordance with a position in the flow path.
[10] The liquid transporting/processing device described in any one of [1] to [9], characterized in that wires connected to the electrodes constituting the first electrodes, respectively, are arranged, forming a layer, on the side of the substrate via an insulating film, and the wires are connected to electrodes that correspond, respectively, to the electrodes constituting the first electrodes via the insulating film.
[11] The liquid transporting/processing device described in any one of [3] and [6] to [10], characterized in that at least two linear flow paths are arranged parallel and meet each other at a confluence region, forming one linear flow path, and liquid drops transported in the at least two flow paths are mixed in the confluence region.
[12] The liquid transporting/processing device described in [11], characterized in that three linear flow paths are arranged parallel and meet one another, forming one linear flow path at a confluence region, and liquid drops transported in the two side linear flow paths contact and mix with a liquid drop transported in the middle flow path in the confluence region.
[13] The liquid transporting/processing device described in [12], characterized in that the two side linear flow paths extend to the confluence region from a first liquid-supplying part provided on the substrate, and the middle linear flow path extends to the confluence region from a second liquid-supplying part provided on that part of the substrate which lies between the two side linear flow paths.
[14] The liquid transporting/processing device described in [13], characterized in that the two side linear flow paths extend from the first liquid-supplying part to the confluence region for substantially the same distance.
[15] The liquid transporting/processing device described in any one of [4] and [6] to [10], characterized in that an air hole is made in the hollow cylinder at a midpoint of the flow path, and near the air hole, liquid drops mix together while being transported in the opposite directions in the flow path extending along the inner surface of the hollow cylinder.
[16] The liquid transporting/processing device described in any one of [3] and [6] to [10], characterized in that a stirring region is provided in a middle part of a linear flow path.
[17] The liquid transporting/processing device described in [16], characterized in that the electrode that constitute the first electrodes in the stirring region differ in shape from the electrode that constitutes the first electrode in those parts of the linear path, which lie before and after the stirring region.
[18] The liquid transporting/processing device described in [17], characterized in that the electrodes that constitute the first electrodes in the stirring region are shaped so that liquid drops may roll in a circle.
[19] The liquid transporting/processing device described in [17], characterized in that the electrodes that constitute the first electrodes in the stirring region are shaped so that liquid drops may be transported in a direction that intersect with the direction in which the liquid drops are transported in those parts of the flow path which lie before and after the stirring region.
[20] The liquid transporting/processing device described in [16], characterized in that the flow path is broader in the stirring region than in those parts of the flow path which lie before and after the stirring region.
[21] The liquid transporting/processing device described in [20], characterized in that flow-preventing projections are provided at junctions of the stirring region and those parts of the flow path which lie before and after the stirring region, for blocking and entering liquid drops, causing turbulence, as liquid drops move from a broad path to a narrow path.
[22] The liquid transporting/processing device described in [16], characterized in that a linear flow path is made in the substrate, in the form of a groove, a group of projections are provided in the stirring region, forming a zigzag path, and liquid drops are elongated and shrunk while passing between the projections.
[23] The liquid transporting/processing device described in [16], characterized in that a linear flow path is made in the substrate, in the form of a groove, the stirring region is defined by a gate part that is arranged in the flow path, and liquid drops are elongated and shrunk while passing through the gate part.
[24] The liquid transporting/processing device described in [16], characterized in that hydrophilic regions and hydrophobic regions are alternately arranged in the direction the linear flow path forming the stirring region extends.
[25] The liquid transporting/processing device described in any one of [3] and [6] to [10] , characterized in that a metering unit or a sampling unit is provided in a middle part of the linear flow path.
[26] The liquid transporting/processing device described in [25] , characterized in that the metering unit or sampling unit comprises at least one inlet path through which liquid is drawn in a predetermined amount and accumulated in the middle part of the linear flow path.
[27] The liquid transporting/processing device described in [25] or [26] , characterized in that the linear flow path constitutes a circular flow path.
[28] The liquid transporting/processing device described in any one of [4] and [6] to [10], characterized in that an air hole is made in the hollow cylinder at a midpoint of the flow path, and liquid is continuously transported in one direction in the vicinity of the air hole, and the liquid is divided and transported in the vicinity of the air hole, thereby to sample the liquid in a predetermined amount.
[29] The liquid transporting/processing device described in any one of [1] to [22] and [25] to [28], characterized in that a film made of water-repellant insulating material is firmly adhered, in replaceable fashion, to the surface of the flow path.
[30] The liquid transporting/processing device described in any one of [1] to [29], characterized in that an illuminating means for illuminating the entire flow path and a photographing means for photographing the entire flow path are provided, and the position or motion of a liquid drop is monitored on the basis of an image signal generated by the photographing means.
[31] The liquid transporting/processing device described in [30], characterized in that the illumination performed by the illuminating means is incident illumination.
[32] The liquid transporting/processing device described in [30], characterized in that the illumination performed by the illuminating means is dark-field illumination.
[33] The liquid transporting/processing device described in any one of [1] to [29], characterized in that an illumination means for performing transmitted illumination on the entire flow path and an array of light-receiving elements arranged parallel on the transmission side of the flow path are provided, and the position or motion of a liquid drop is monitored on the basis of signals representing the intensity of light that the light-receiving elements have received.
[34] The liquid transporting/processing device described in [33], characterized in that a spatial frequency filtering means is arranged between the flow path and the array of light-receiving elements.
[35] The liquid transporting/processing device described in any one of [1] to [34], characterized in that at least one of the heating means, cooling means and temperature-detecting means is provided at the flow path or in the vicinity thereof.
[36] The liquid transporting/processing device described in any one of [1] to [35], characterized in that a plurality of units are coupled in series or parallel, the units being identical or different to perform different processes or for use in different flow paths.
[37] The liquid transporting/processing device described in [36], characterized in that a plurality of flow paths are arranged parallel in one unit, for performing the same process.
[38] The liquid transporting/processing device described in any one of [3] and [6] to [10], characterized in that a circular flow path is provided, and a liquid-processing unit and a liquid-characteristic detecting unit are provided in the circular flow path, the liquid-characteristic detecting unit being one designed to detect characteristics of the liquid processed by the liquid-processing unit.

Liquid transporting/processing devices and liquid transporting/processing methods according to the present invention can be configured as follows.
[1] A liquid transporting/processing method of mixing at least two liquid drops in a flow path that electrically controls transportation of the liquid drops, characterized in that the at least two liquid drops are independently transported toward a confluence point in the flowpath and are mixed into one liquid drop at the confluence point, and the liquid drop formed by mixing the liquid drops is transported in a direction, away from the confluence point.
[2] The liquid transporting/processing method described in [1], characterized in that three liquid drops are mixed into one liquid drop at the confluence point in the flow path, as two liquid drops contact the middle liquid drop at the sides thereof.
[3] The liquid transporting/processing method described in [1] or [2], characterized in that the flow path comprises linear flow paths, and the at least two liquid drops are mixed with the one liquid drop in at least two linear flow paths that extends to the confluence point and in one flow path that extends from the confluence point.
[4] The liquid transporting/processing method described in [1] or [2], characterized in that the flow path comprises a planer flow path capable to transporting a liquid drop in any desired direction on its surface, and the confluence point is located at a given point on the flow path.
[5] The liquid transporting/processing method described in [1], characterized in that the flow path comprises one linear flow path, two liquid drops are transported in opposite directions toward the confluence point, and contact each other in the vicinity of the confluence point and mix with each other into one liquid drop, and the liquid drop thus formed is transported in any direction away from the confluence point.
[6] The liquid transporting/processing method described in [5], characterized in that the flow path comprises a flow path of closed type, and an air hole is made in the vicinity of the confluence point.
[7] The liquid transporting/processing method described in any one of [1] to [6], characterized in that the flow path has a plurality of first electrodes arranged parallel to the liquid drop through an insulating layer, a second electrode that is to contact the liquid drop, and a control means for controlling, respectively, voltages applied to the first electrodes arranged parallel to the second electrode, and the control means comprises flow paths that are configured to control, respectively, the voltages applied to the first electrodes arranged parallel, thereby to move the liquid drop along the insulating layer.
[8] The liquid transporting/processing method described in any one of [1] to [6], characterized in that the flow path has a plurality of first electrodes arranged parallel to the liquid drop through an insulating layer, a second electrode that is arranged to the liquid drop through an insulating layer, and a control means for controlling, respectively, voltages applied to the first electrodes arranged parallel with respect to the second electrode, and the control means comprises flow paths that are configured to control, respectively, the voltages applied to the first electrodes arranged parallel, thereby to move the liquid drop along the insulating layer.
[9] The liquid transporting/processing method described in [7] or [8], characterized in that the second electrode that constitutes the flow path is on a substrate on which the first electrodes are arranged, and is arranged between some of the first electrodes arranged parallel or in a gap made in at least one of the first electrodes.
[10] The liquid transporting/processing method described in any one of [7] to [9], characterized in that the first electrodes that constitute the flow path are arranged parallel, forming a two-dimensional array.
[11] The liquid transporting/processing method described in [8], characterized in that the second electrode that constitutes the flow path comprises a plurality of electrodes arranged parallel.
[12] The liquid transporting/processing method described in [11], characterized in that the first electrodes extend parallel, intersecting with the second electrodes that extend parallel.
[13] The liquid transporting/processing method described in any one of [1] to [6] , characterized in that the flow path comprises a plurality of electrodes arranged parallel to a liquid drop through an insulating layer, the electrodes arranged parallel forming at least three electrode groups alternately and cyclically arranged in the direction of transporting the liquid drop, and has a control means for controlling, respectively, phases of AC voltages applied to the at least three electrode groups, and the control means comprises flow paths that are configured to control, respectively, the phases of the AC voltages applied to the at least three electrode groups, thereby to move the liquid drop along the insulating layer.
[14] The liquid transporting/processing method described in any one of [7] to [13], characterized in that a water-repellant layer is provided on the insulating layer that contacts the liquid drop.
[15] A liquid transporting/processing device characterized in that at least two linear flow paths that can electrically control transportation of liquid drops are arranged parallel and meet each other at a confluence region, forming one linear flow path, and the liquid drops transported in the at least two linear flow paths arranged parallel are mixed in the confluence region.
[16] The liquid transporting/processing device described in [15], characterized in that three linear flow paths are arranged parallel and meet one another, forming one linear flow path at a confluence region, and liquid drops transported in the two side linear flow paths contact and mix with a liquid drop transported in the middle flow path, in the confluence region.
[17] The liquid transporting/processing device described in [16], characterized in that the two side linear flow paths extend to the confluence region from a first liquid-supplying part provided on the substrate, and the middle linear flow path extends to the confluence region from a second liquid-supplying part provided on that part of the substrate which lies between the two side linear flow paths.
[18] The liquid transporting/processing device described in [17] , characterized in that the two side linear flow paths extend from the first liquid-supplying part to the confluence region for substantially the same distance.
[19] A liquid transporting/processing device characterized in that a linear flow path of closed type is provided, which can electrically control transportation of liquid drops, an air hole is made in a middle part of the linear flow path, and two liquid drops transported in the opposite directions toward the air hole mix together into one liquid drop in the vicinity of the air hole.
[20] The liquid transporting/processing device described in any one of [15] to [19], characterized in that the linear flow path has a plurality of first electrodes arranged parallel to the liquid drops through an insulating layer, a second electrode that is to contact the liquid drops or arranged through an insulating layer, and a control means for controlling, respectively, voltages applied to the first electrodes arranged parallel to the second electrode, and the control means is configured to control, respectively, the voltages applied to the first electrodes arranged parallel, thereby to move the liquid drops along the insulating layer.
[21] The liquid transporting/processing device described in [20], characterized in that the second electrode that constitutes the flow path is on a substrate on which the first electrodes are arranged, and is arranged between some of the first electrodes arranged parallel or in a gap made in at least one of the first electrodes.
[22] The liquid transporting/processing device described in any one of [15] to [19], characterized in that the linear flow path comprises a plurality of electrodes arranged parallel to a liquid drop through an insulating layer, the electrodes arranged parallel forming at least three electrode groups alternately and cyclically arranged in the direction of transporting the liquid drop, and has a control means for controlling, respectively, phases of AC voltages applied to the at least three electrode groups, and the control means comprises flow paths that is configured to control, respectively, the phases of the AC voltages applied to the at least three electrode groups, thereby to move the liquid drop along the insulating layer.
[23] The liquid transporting/processing device described in any one of [20] to [22] , characterized in that a water-repellant layer is provided on the insulating layer that contacts the liquid drop.
[24] A liquid transporting/processing method in which liquid drops are mixed and stirred in a flow path that electrically controls transportation of the liquid drops, characterized in that the liquid drops are deformed in a specific region of the flow path, thereby to promote the mixing and the stirring.
[25] The liquid transporting/processing method described in [24], characterized in that the liquid drops are rotated along a closed curve in the specific region of the flow path, thereby to promote the mixing and the stirring.
[26] The liquid transporting/processing method described in [24], characterized in that the liquid drops are alternately elongated and shrunk or alternately divided and mixed in a direction of transporting the liquid drops and a direction intersecting with the transporting direction, thereby to promote the mixing and the stirring.
[27] The liquid transporting/processing method described in [24], characterized in that the liquid drops are made to roll back and forth in the specific region of the flow path, in the transporting direction, thereby to promote the mixing and the stirring.
[28] The liquid transporting/processing method described in [24], characterized in that the flow path is a linear flow path, the specific region of the flow path is broader than the parts that lie before and after the specific region, and the liquid drops are moved back and forth in the specific region in the transporting direction, elongating and shrinking the liquid drops in a direction intersecting with the transporting direction, thereby to promote the mixing and the stirring.
[29] The liquid transporting/processing method described in [28], characterized in that flow-preventing projections are provided at junctions of the specific region and those parts of the flow path which lie before and after the specific region, for blocking and entering liquid drops, causing turbulence, as the liquid drops move from a broad path to a narrow path, and the liquid drops are moved back and forth in the specific region in the transporting direction, causing turbulence in the liquid drops, thereby to promote the mixing and the stirring.
[30] The liquid transporting/processing method described in [24] , characterized in that a linear flow path is made in the substrate, in the form of a groove, a group of projections are provided in the flow path, forming a zigzag path, and liquid drops are elongated and shrunk while passing between the projections, thereby to promote the mixing and the stirring.
[31] The liquid transporting/processing method described in [24] , characterized in that a linear flow path is made in the substrate, in the form of a groove, a gate part is arranged in the flow path, and liquid drops are elongated and shrunk while passing through the gate part, thereby to promote the mixing and the stirring.
[32] The liquid transporting/processing method described in [24], characterized in that hydrophilic regions and hydrophobic regions are alternately arranged in the specific region in the direction of transporting the liquid drops, and the liquid drops are moved back and forth in the specific region, elongating and shrinking the liquid drops, thereby to promote the mixing and the stirring.
[33] The liquid transporting/processing method described in any one of [24] to [32], characterized in that the flow path has a plurality of first electrodes arranged parallel to the liquid drops through an insulating layer, a second electrode that is to contact the liquid drops, and a control means for controlling, respectively, voltages applied to the first electrodes arranged parallel to the second electrode, and the control means comprises flow paths that are configured to control, respectively, the voltages applied to the first electrodes arranged parallel, thereby to move the liquid drops along the insulating layer.
[34] The liquid transporting/processing method described in any one of [24] to [32], characterized in that the flow path has a plurality of first electrodes arranged parallel to the liquid drops through an insulating layer, a second electrode that is arranged to the liquid drops through an insulating layer, and a control means for controlling, respectively, voltages applied to the first electrodes arranged parallel to the second electrode, and the control means comprises flow paths that are configured to control, respectively, the voltages applied to the first electrodes arranged parallel, thereby to move the liquid drop along the insulating layer.
[35] The liquid transporting/processing method described in [33] or [34], characterized in that the second electrode that constitutes the flow path is on a substrate on which the first electrodes are arranged, and is arranged between some of the first electrodes arranged parallel or in a gap made in at least one of the first electrodes.
[36] The liquid transporting/processing method described in any one of [33] to [35], characterized in that the first electrodes that constitute the flow path are arranged parallel, forming a two-dimensional array.
[37] The liquid transporting/processing method described in [34], characterized in that the second electrode that constitutes the flow path comprises a plurality of electrodes arranged parallel.
[38] The liquid transporting/processing method described in [37], characterized in that the first electrodes extend parallel, intersecting with the second electrodes that extend parallel.
[39] The liquid transporting/processing method described in any one of [24] to [32], characterized in that the flow path comprises a plurality of electrodes arranged parallel to a liquid drop through an insulating layer, the electrodes arranged parallel, forming at least three electrode groups alternately and cyclically arranged in the direction of transporting the liquid drop, and has a control means for controlling, respectively, phases of AC voltages applied to the at least three electrode groups, and the control means comprises flow paths that are configured to control, respectively, the phases of the AC voltages applied to the at least three electrode groups, thereby to move the liquid drop along the insulating layer.
[40] The liquid transporting/processing method described in any one of [33] to [39], characterized in that a water-repellant layer is provided on the insulating layer that contacts the liquid drop.
[41] A liquid transporting/processing device characterized in that a mixing/stirring region is provided on a linear flow path that can electrically control transportation of liquid drops, the liquid drops being deformed in the mixing/stirring region, thereby to promote the mixing and the stirring.
[42] The liquid transporting/processing device described in [41], characterized in that electrodes provided in the mixing/stirring region differ in shape from electrodes provided in those parts of the linear flow path, which lie before and after the mixing/stirring region.
[43] The liquid transporting/processing device described in [42], characterized in that the electrodes provided in the mixing/stirring region are shaped so that the liquid drops may be transported while rotating along a closed curve.
[44] The liquid transporting/processing device described in [42], characterized in that the electrodes provided in the mixing/stirring region are shaped so that the liquid drops may be transported in a direction that intersects with a direction in which the liquid drops are transported before and after the mixing/stirring region.
[45] The liquid transporting/processing device described in [41], characterized in that the flow path is broader in the mixing/stirring region than in the parts lie before and after the mixing/stirring region.
[46] The liquid transporting/processing device described in [45], characterized in that flow-preventing projections are provided at junctions of the mixing/stirring region and those parts of the flow path which lie before and after the mixing/stirring region, for blocking and entering liquid drops, causing turbulence, as the liquid drops move from a broad path to a narrow path.
[47] The liquid transporting/processing device described in [41], characterized in that the linear flow path is made in a substrate, in the form of a groove, the mixing/stirring region comprises a group of projections that form a zigzag path in the linear flow path, and liquid drops are elongated and shrunk while passing between the projections.
[48] The liquid transporting/processing device described in [41], characterized in that the linear flow path is made in a substrate, in the form of a groove, the mixing/stirring region comprises a gate part that is arranged in the linear flow path, and liquid drops are elongated and shrunk while passing through the gate part.
[49] The liquid transporting/processing device described in [41], characterized in that hydrophilic regions and hydrophobic regions are alternately arranged in the direction in which the linear flow path constituting the mixing/stirring region extends.
[50] The liquid transporting/processing device described in any one of [41] to [49], characterized in that the linear flow path has a plurality of first electrodes arranged parallel to the liquid drops through an insulating layer, a second electrode that is to contact the liquid drops or arranged through an insulating layer, and a control means for controlling, respectively, voltages applied to the first electrodes arranged parallel to the second electrode, and the control means is configured to control, respectively, the voltages applied to the first electrodes arranged parallel, thereby to move the liquid drops along the insulating layer.
[51] The liquid transporting/processing device described in [50], characterized in that the second electrode that constitutes the flow path is on a substrate on which the first electrodes are arranged, and is arranged between some of the first electrodes arranged parallel or in a gap made in at least one of the first electrodes.
[52] The liquid transporting/processing device described in any one of [41] to [49], characterized in that the linear flow path comprises a plurality of electrodes arranged parallel to a liquid drop through an insulating layer, the electrodes arranged parallel forming at least three electrode groups alternately and cyclically arranged in the direction of transporting the liquid drop, and has a control means for controlling, respectively, phases of AC voltages applied to the at least three electrode groups, and the control means comprises flow paths that are configured to control, respectively, the phases of the AC voltages applied to the at least three electrode groups, thereby to move the liquid drop along the insulating layer.
[53] The liquid transporting/processing device described in any one of [50] to [52], characterized in that a water-repellant layer is provided on the insulating layer that contacts the liquid drop.

Liquid transporting/processing devices and liquid transporting/processing methods according to the present invention can be configured as follows.
[1] A liquid transporting/processing method characterized in that liquid being transported in a flow path that electrically controls transportation of the liquid is sampled in a predetermined amount, thereby to measure or sample that amount of liquid.
[2] The liquid transporting/processing method described in [1], characterized in that the flow path comprises a linear flow path, the liquid being transported in the linear flow path is drawn into an inlet flow path connected to a middle part of the linear flow path and configured to hold a predetermined amount of liquid, and the liquid held in the inlet flow path is independently transported through the linear flow path.
[3] The liquid transporting/processing method described in [2], characterized in that the linear flow path is a circular flow path and the inlet flow path is connected to the linear flow path at any part of the linear flow path.
[4] The liquid transporting/processing method described in [1], characterized in that the flow path comprises a linear flow path, a division point is set in a middle part of the linear flow path, the liquid is introduced into the linear flow path, at one end thereof, preventing a leading edge of the liquid from passing the division point and a trailing edge of the liquid from reaching the division point, the liquid is thereafter divided into two parts at the division point, and these parts of liquid are transported independently in the linear flow path, between the leading edge of the liquid and the divisional point.
[5] The liquid transporting/processing method described in [4], characterized in that the linear flow path comprises a flow path of closed type, and an air hole is made in the vicinity of the division point.
[6] The liquid transporting/processing method described in [1], characterized in that the flow path comprises a planer flow path that can transport the liquid in any desired direction on its surface, the liquid is introduced into the planer flow path in one direction so that the leading edge of the liquid forms a projection of predetermined width and length, and the projection of liquid is separated from the liquid and independently transported in the planer flow path.
[7] The liquid transporting/processing method described in [6], characterized in that the liquid is introduced, forming a plurality of projections of the same width and length at the leading edge of the liquid, the projections thus formed are separated from the liquid, transported in the planer flow path and mixed at a confluence point, and the liquid obtained by the mixing is transported in the planer flow path.
[8] The liquid transporting/processing method described in [6] or [7], characterized in that the planer flow path is a circular flow path.
[9] The liquid transporting/processing method described in any one of [1] to [8], characterized in that the flow path has a plurality of first electrodes arranged parallel to the liquid through an insulating layer, a second electrode that is to contact the liquid, and a control means for controlling, respectively, voltages applied to the first electrodes arranged parallel to the second electrode, and the control means comprises flow paths that are configured to control, respectively, the voltages applied to the first electrodes arranged parallel, thereby to move the liquid along the insulating layer.
[10] The liquid transporting/processing method described in any one of [1] to [8], characterized in that the flow path has a plurality of first electrodes arranged parallel to the liquid through an insulating layer, a second electrode that is arranged to the liquid through an insulating layer, and a control means for controlling, respectively, voltages applied to the first electrodes arranged parallel to the second electrode, and the control means comprises flow paths that are configured to control, respectively, the voltages applied to the first electrodes arranged parallel, thereby to move the liquid along the insulating layer.
[11] The liquid transporting/processing method described in [9] or [10], characterized in that the second electrode that constitutes the flow path is on a substrate on which the first electrodes are arranged, and is arranged between some of the first electrodes arranged parallel or in a gap made in at least one of the first electrodes.
[12] The liquid transporting/processing method described in any one of [9] to [11], characterized in that the first electrodes that constitute the flow path are arranged parallel, forming a two-dimensional array.
[13] The liquid transporting/processing method described in [10], characterized in that the second electrode that constitutes the flow path comprises a plurality of electrodes arranged parallel.
[14] The liquid transporting/processing method described in [13], characterized in that the first electrodes extend parallel, intersecting with the second electrodes that extend parallel.
[15] The liquid transporting/processing method described in any one of [1] to [8], characterized in that the flow path comprises a plurality of electrodes arranged parallel to liquid through an insulating layer, the electrodes arranged parallel forming at least three electrode groups alternately and cyclically arranged in the direction of transporting the liquid, and has a control means for controlling, respectively, phases of AC voltages applied to the at least three electrode groups, and the control means comprises flow paths that are configured to control, respectively, the phases of the AC voltages applied to the at least three electrode groups, thereby to move the liquid along the insulating layer.
[16] The liquid transporting/processing method described in any one of [9] to [15], characterized in that a water-repellant layer is provided on the insulating layer that contacts the liquid.
[17] A liquid transporting/processing device characterized in that a metering unit or a sampling unit that samples a predetermined amount of liquid from a linear flow path that can electrically control transportation of liquid.
[18] The liquid transporting/processing device described in [17], characterized in that the metering unit or sampling unit comprises an inlet flow path that is connected to a middle part of the linear flow path and configured to hold a predetermined amount of liquid.
[19] The liquid transporting/processing device described in [17], characterized in that the linear flow path comprises a flow path of closed type, an air hole is made in a middle part of the linear flow path, the liquid is continuously transported in one direction in the vicinity of the air hole, and the liquid is then divided and transported in the vicinity of the air hole, thereby to sample the liquid in a predetermined amount.
[20] The liquid transporting/processing device described in [18] or [19], characterized in that the linear flow path constitutes a circular flow path.
[21] The liquid transporting/processing device described in any one of [17] to [20], characterized in that the linear flow path has a plurality of first electrodes arranged parallel to the liquid through an insulating layer, a second electrode that is to contact the liquid or arranged through an insulating layer, and a control means for controlling, respectively, voltages applied to the first electrodes arranged parallel to the second electrode, and the control means is configured to control, respectively, the voltages applied to the first electrodes arranged parallel, thereby to move the liquid along the insulating layer.
[22] The liquid transporting/processing device described in [21], characterized in that the second electrode that constitutes the flow path is on a substrate on which the first electrodes are arranged, and is arranged between some of the first electrodes arranged parallel or in a gap made in at least one of the first electrodes.
[23] The liquid transporting/processing device described in any one of [17] to [20], characterized in that the linear flow path comprises a plurality of electrodes arranged parallel to the liquid through an insulating layer, the electrodes arranged parallel forming at least three electrode groups alternately and cyclically arranged in the direction of transporting the liquid, and has a control means for controlling, respectively, phases of AC voltages applied to the at least three electrode groups, and the control means comprises flow paths that are configured to control, respectively, the phases of the AC voltages applied to the at least three electrode groups, thereby to move the liquid along the insulating layer.
[24] The liquid transporting/processing device described in any one of [17] to [23], characterized in that a water-repellant layer is provided on the insulating layer that contacts the liquid.

Liquid transporting/processing devices and liquid transporting/processing methods according to the present invention can be configured as follows.
[1] A liquid transporting/processing method in which a plurality of liquid drops are arranged, in two-dimensional directions, in a flow path that is a planer flow path in which a liquid drop can be transported in any desired direction by applying a voltage on and off to segments forming a two-dimensional array, or by independently controlling voltages applied to the segments, and a specific liquid drop is transported through the segments provided between the liquid drops thus arranged and is moved from the flow path or re-arranged, the method characterized in that at least three segments are arranged parallel, between any two adjacent liquid drops.
[2] The liquid transporting/processing method described in [1], characterized in that the flow path has a plurality of first electrodes arranged parallel to the liquid drops through an insulating layer, forming a two-dimensional array, a second electrode that is to contact the liquid drops, and a control means for controlling, respectively, voltages applied to the first electrodes arranged parallel to the second electrode, regions corresponding to the first electrodes constitute the segments, respectively, and the control means comprises flow paths that are configured to control, respectively, the voltages applied to the first electrodes arranged parallel, thereby to move the liquid drops along the insulating layer.
[3] The liquid transporting/processing method described in [1], characterized in that the flow path has a plurality of first electrodes arranged parallel to the liquid drops through an insulating layer, forming a two-dimensional array, a second electrode that is arranged to the liquid drops through an insulating layer, and a control means for controlling, respectively, voltages applied to the first electrodes arranged parallel to the second electrode, regions corresponding to the first electrodes constitute the segments, respectively, and the control means comprises flow paths that are configured to control, respectively, the voltages applied to the first electrodes arranged parallel, thereby to move the liquid drops along the insulating layer.
[4] The liquid transporting/processing method described in [2] or [3], characterized in that the second electrode that constitutes the flow path is on a substrate on which the first electrodes are arranged, and is arranged between some of the first electrodes arranged parallel or in a gap made in at least one of the first electrodes.
[5] The liquid transporting/processing method described in [1], characterized in that the flow path has a plurality of first electrodes elongated and extending parallel to one another and in one-dimensional direction and arranged with respect to the liquid drops through an insulating layer, a second electrode that is arranged to the liquid drops through an insulating layer, in one-dimensional direction intersecting with the direction in which the first electrodes are arranged parallel, and a control means for controlling, respectively, voltages applied between the first electrodes and the second electrode, intersections of the first electrodes and the second electrode constitute the segments, respectively, and the control means comprises flow paths that are configured to control, respectively, the voltages applied to the first electrodes arranged parallel and the second electrode, thereby to move the liquid drops along the insulating layer.
[6] The liquid transporting/processing method described in [1], characterized in that the flow path comprises a plurality of electrodes arranged parallel to the liquid drops through an insulating layer, the electrodes arranged parallel forming two-dimensional array and at least three electrode groups alternately and cyclically arranged in the direction of transporting the liquid drops, and has a control means for controlling, respectively, phases of AC voltages applied to the at least three electrode groups, and the control means comprises flow paths that are configured to control, respectively, the phases of the AC voltages applied to the at least three electrode groups, thereby to move the liquid drops along the insulating layer.
[7] The liquid transporting/processing method described in any one of [2] to [6], characterized in that a water-repellant layer is provided on the insulating layer that contacts the liquid.
[8] A liquid transporting/processing device characterized by comprising an illumination light source that illuminates the surface of the flow path that electrically controls transportation of liquid, and a photographing device that photographs the surface of the flow path and monitors the position or motion of a liquid drop in the flow path.
[9] The liquid transporting/processing device described in [8], characterized in that the illumination light source is arranged on the same side of the surface of the flow path, as the photographing device, and the photographing device monitors the position or motion of the liquid drop by using light scattered by the liquid drop in the flow path.
[10] The liquid transporting/processing device described in [8], characterized in that the illumination light source is arranged on the side of the surface of the flow path, which faces away from the side on which the photographing device is provided, and the photographing device comprises a plurality of light-receiving elements arranged in parallel for receiving light focused or scattered by the liquid drop in the flowpath and is designed to monitor the position or motion of the liquid drop from signals generated by the light-receiving elements and representing the intensity of light that the light-receiving elements have received.
[11] The liquid transporting/processing device described in [10], characterized in that a spatial frequency filtering means is arranged between the surface of the flow path and the light-receiving elements.
[12] The liquid transporting/processing device described in any one of [8] to [11], characterized in that the flow path has a plurality of first electrodes arranged parallel to the liquid drops through an insulating layer, a second electrode that is to contact the liquid drop, and a control means for controlling, respectively, voltages applied to the first electrodes arranged parallel to the second electrode, and the control means comprises flow paths that are configured to control, respectively, the voltages applied to the first electrodes arranged parallel, thereby to move the liquid drop along the insulating layer.
[13] The liquid transporting/processing device described in any one of [8] to [11], characterized in that the flow path has a plurality of first electrodes arranged parallel to the liquid drop through an insulating layer, a second electrode that is arranged to the liquid drop through an insulating layer, and a control means for controlling, respectively, voltages applied to the first electrodes arranged parallel with respect to the second electrode, and the control means comprises flow paths that are configured to control, respectively, the voltages applied to the first electrodes arranged parallel, thereby to move the liquid drop along the insulating layer.
[14] The liquid transporting/processing device described in [12] or [13], characterized in that the second electrode that constitutes the flow path is on a substrate on which the first electrodes are arranged, and is arranged between some of the first electrodes arranged parallel or in a gap made in at least one of the first electrodes.
[15] The liquid transporting/processing device described in any one of [12] to [14], characterized in that the first electrodes that constitute the flow path are arranged parallel, forming a two-dimensional array.
[16] The liquid transporting/processing device described in [13], characterized in that the second electrode that constitutes the flow path comprises a plurality of electrodes arranged parallel.
[17] The liquid transporting/processing device described in [16], characterized in that the first electrodes extend parallel, intersecting with the second electrodes that extend parallel.
[18] The liquid transporting/processing device described in any one of [8] to [11], characterized in that the flow path comprises a plurality of electrodes arranged parallel to a liquid drop through an insulating layer, the electrodes arranged parallel forming at least three electrode groups alternately and cyclically arranged in the direction of transporting the liquid drop, and has a control means for controlling, respectively, phases of AC voltages applied to the at least three electrode groups, and the control means comprises flow paths that are configured to control, respectively, the phases of the AC voltages applied to the at least three electrode groups, thereby to move the liquid drop along the insulating layer.
[19] The liquid transporting/processing device described in any one of [12] to [18], characterized in that a water-repellant layer is provided on the insulating layer that contacts the liquid drop.

A liquid transporting/processing system according to this invention can be configured, for example, as described below.
[1] A liquid transporting/processing system characterized by comprising a flow path that can electrically control transportation of liquid or a liquid drop, and a plurality of liquid transporting/processing units that are to be coupled to another flow path, at a middle part or end part, each unit capable of performing a process on the liquid or the liquid drop for a specific purpose.
[2] The liquid transporting/processing system described in [1] , characterized in that a plurality of flow paths are arranged in parallel to perform the same process, in at least one of the liquid transporting/processing units .
[3] The liquid transporting/processing system described in [1] or [2], characterized in that at least one of the liquid transporting/processing units performs at least one of processes including mixing, stirring, branching, metering, sampling, washing, sorting, detecting, heating, cooling, circulating.
[4] A liquid transporting/processing system characterized by comprising a circular flow path that can electrically control transportation of liquid or a liquid drop, a liquid transporting/processing unit that is provided with a process unit at a middle part of the circular flow path, for performing a process, for a specific purpose, on the liquid or the liquid drop being transported in the flow path, and a measuring unit for detecting changes in the characteristics of the liquid or the liquid drop processed in the processing unit.
[5] The liquid transporting/processing system described in any one of [1] to [4], characterized in that a temperature sensor is provided in the substrate of at least one liquid transporting/processing unit.
[6] The liquid transporting/processing system described in any one of [1] to [5], characterized in that a temperature sensor is provided, which monitors the temperature of an atmosphere in which the liquid transporting/processing unit is provided.
[7] The liquid transporting/processing system described in any one of [1] to [6], characterized by comprising a humidity sensor that monitors the humidity of an atmosphere in which the liquid transporting/processing unit is provided, a humidifier that raises the humidity of the atmosphere, and a de-humidifier that lowers the humidity of the atmosphere.
[8] The liquid transporting/processing system described in any one of [1] to [7], characterized in that a flexible substrate is used as substrate for at least one liquid transporting/processing unit.
[9] The liquid transporting/processing system described in any one of [1] to [8], characterized in that the flowpath of at least one liquid transporting/processing unit has a plurality of first electrodes arranged parallel to liquid or a liquid drop through an insulating layer, a second electrode that is to contact the liquid or the liquid drop, and a control means for controlling, respectively, voltages applied to the first electrodes arranged parallel to the second electrode, and the control means comprises flow paths that are configured to control, respectively, the voltages applied to the first electrodes arranged parallel, thereby to move the liquid or the liquid drop along the insulating layer.
[10] The liquid transporting/processing system described in any one of [1] to [8], characterized in that the flowpathof at least one liquid transporting/processing unit has a plurality of first electrodes arranged parallel to the liquid or the liquid drop through an insulating layer, a second electrode that is arranged to the liquid or the liquid drop through an insulating layer, and a control means for controlling, respectively, voltages applied to the first electrodes arranged parallel to the second electrode, and the control means comprises flow paths that are configured to control, respectively, the voltages applied to the first electrodes arranged parallel, thereby to move the liquid or the liquid drop along the insulating layer.
[11] The liquid transporting/processing system described in [9] or [10], characterized in that the second electrode that constitutes the flow path is on a substrate on which the first electrodes are arranged, and is arranged between some of the first electrodes arranged parallel or in a gap made in at least one of the first electrodes.
[12] The liquid transporting/processing system described in any one of [9] to [11], characterized in that the first electrodes that constitute the flow path are arranged parallel, forming a two-dimensional array.
[13] The liquid transporting/processing system described in [10], characterized in that the second electrode that constitutes the flow path comprises a plurality of electrodes arranged parallel.
[14] The liquid transporting/processing system described in [13], characterized in that the first electrodes extend parallel, intersecting with the second electrodes that extend parallel.
[15] The liquid transporting/processing system described in any one of [1] to [8], characterized in that the flow path of at least one liquid transporting/processing unit comprises a plurality of electrodes arranged parallel to liquid or a liquid drop through an insulating layer, the electrodes arranged parallel forming at least three electrode groups alternately and cyclically arranged in the direction of transporting the liquid or the liquid drop, and has a control means for controlling, respectively, phases of AC voltages applied to the at least three electrode groups, and the control means comprises flow paths that are configured to control, respectively, the phases of the AC voltages applied to the at least three electrode groups, thereby to move the liquid or the liquid drop along the insulating layer.
[16] The liquid transporting/processing system described in any one of [9] to [15], characterized in that a water-repellant layer is provided on the insulating layer that contacts the liquid or liquid drops.

### Industrial Applicability

Any liquid transporting/processing device and any liquid transporting/processing method, according to this invention, can transport and process liquid in a flow path that remains clean because the flow path is washed if contaminated with the liquid previously transported, or any surface contaminated is replaced in the flow path.

This invention can provide a liquid transporting/processing device that utilizes the electro-wetting phenomenon occurring in a planer or hollow-cylindrical flow path of opened type. Further, the device can perform various processes on liquid in the linear or planer flow path.

Moreover, liquid drops can be reliably mixed in the flow path, and the mixing and stirring can be promoted, thereby to render liquid drops uniform.

In addition, a predetermined amount of liquid can be measured in the flow path and then sampled from the flow path.

Specific liquid drops can be selected from those transported in a planer flow path, or can be reliably re-arranged in the planer flow path. Further, the liquid drops being transported in the flow path can be reliably monitored in terms of position or motion.

A liquid transporting/processing system according to this invention has a plurality of liquid transporting/processing units that are coupled, each of which can perform a process for a specific purpose on the liquid or liquid drops being transported in the flow path. Some of the liquid transporting/processing units can be selected and coupled in series or parallel. They can therefore be used to perform processes on the liquid for various purposes. The system may have, as a liquid transporting/processing unit, a process unit that performs a process, for a specific purpose, on the liquid or liquid drops being transported in the flow path, and a measuring unit for detecting changes in the characteristics of the liquid or liquid drops that have been processed in the processing unit. In this case, the system can detect the changes that occur with time in the liquid or liquid drops as the liquid or liquid drops are heated or cooled.

## Claims

1. A liquid transporting/processing device **characterized by** comprising:
a flow path which is provided on a substrate and in which a plurality of liquid drops move;
a plurality of electrodes which are applied with a voltage that is controlled to move the liquid drops in the flow path in a prescribed direction; and
an insulating layer that electrically insulates the liquid drops existing in the flow path, from at least some of the electrodes,
the device having the function of suppressing contamination of the liquid drops passing through the flow path.

2. The liquid transporting/processing device according to claim 1, **characterized in that** the function of suppressing contamination is a function of washing the flow path.

3. The liquid transporting/processing device according to claim 2, **characterized in that** the function of washing the flow path is a function of moving washing solution along the flow path, by utilizing the voltage applied to the electrodes, thereby washing the flow path.

4. The liquid transporting/processing device according to claim 3, **characterized in that** the function of moving washing solution, thereby washing the flow path, is a function of transporting the washing solution along the flow path, either in one direction or back and forth, thereby washing the flow path.

5. The liquid transporting/processing device according to claim 3, **characterized in that** the function of washing the flow path is a function of washing the flow path, by interposing at least one drop of washing solution between the liquid drops.

6. The liquid transporting/processing device according to claim 1, **characterized in that** the function of suppressing contamination is a function of replacing a film made of water-repellant insulating material and firmly adhered to a surface of the flow path.

7. The liquid transporting/processing device according to claim 6, **characterized in that** the flow path is a flow path of opened type.

8. The liquid transporting/processing device according to claim 1, **characterized in that** the electrodes are constituted by:
a plurality of first electrodes arranged parallel to the liquid drops in the flow path through the insulating layer; and
a second electrode arranged to the liquid drops in the flow path through the insulating layer.

9. The liquid transporting/processing device according to claim 8, **characterized in that** the second electrode is on a substrate on which the first electrodes are arranged, and is arranged between some of the first electrodes arranged parallel or in a gap made in at least one of the first electrodes.

10. The liquid transporting/processing device according to claim 8, **characterized in that** the first electrodes are arranged parallel, forming a two-dimensional array.

11. The liquid transporting/processing device according to claim 8, **characterized in that** the second electrode is constituted by a plurality of electrodes that are arranged parallel.

12. The liquid transporting/processing device according to claim 11, **characterized in that** the first electrodes extend parallel, intersecting with the second electrodes that extend parallel.

13. The liquid transporting/processing device according to claim 8, **characterized by** further comprising control means for controlling, respectively, voltages applied to the first electrodes arranged parallel to the second electrode.

14. The liquid transporting/processing device according to claim 1, **characterized in that** a water-repellant layer is provided on the insulating layer provided between the liquid drops and the electrodes and contacts the liquid drops.

15. A liquid transporting/processing method for use in a liquid transporting/processing device comprising a flow path which is provided on a substrate and in which a plurality of liquid drops move, a plurality of electrodes which are applied with a voltage that is controlled to move the liquid drops in the flow path in a prescribed direction, and an insulating layer that electrically insulates the liquid drops existing in the flow path, from at least some of the electrodes, the method comprising:
a step of moving at least one of the liquid drops by utilizing the voltage applied to the electrodes; and
a step of suppressing contamination of some of the liquid drops, caused by the remaining liquid drops that have moved in the flow path in the prescribed direction.

16. The liquid transporting/processing method according to claim 15, **characterized in that** the step of suppressing contamination includes washing of the flow path.

17. The liquid transporting/processing method according to claim 16, **characterized in that** the washing of the flow path is achieved by moving washing solution along the flow path, by utilizing the voltage applied to the electrodes.

18. The liquid transporting/processing method according to claim 17, **characterized in that** the washing of the flow path is achieved by moving washing solution along the flow path, either in one direction or back and forth, by utilizing the voltage applied to the electrodes.

19. The liquid transporting/processing method according to claim 17, **characterized in that** the washing of the flow path is achieved by interposing at least one drop of washing solution between the liquid drops.

20. The liquid transporting/processing method according to claim 15, **characterized in that** the step of suppressing contamination includes replacing a film made of water-repellant insulating material and firmly adhered to a surface of the flow path.
